# EUROPEAN PATENT SPECIFICATION

(11) **EP 4 507 289 B1**
(45) Date of publication and mention of the grant of the patent: **25.03.2026**
(21) Application number: 23923788.6
(22) Date of filing: 23.11.2023
(51) Int. Cl.: H04N 5/213, H04N 9/68, H04N 9/77, G06T 5/00, G06T 7/90, G06T 5/40

(54) **IMAGE PROCESSING METHOD AND ELECTRONIC DEVICE**
BILDVERARBEITUNGSVERFAHREN UND ELEKTRONISCHE VORRICHTUNG
PROCÉDÉ DE TRAITEMENT D'IMAGES ET DISPOSITIF ÉLECTRONIQUE

(30) Priority: 24.02.2023 CN 202310207723
(43) Date of publication of application: 12.02.2025
(73) Proprietor: Honor Device Co., Ltd., Shenzhen, Guangdong 518040 (CN)
(72) Inventor: QIAO, Xiaolei, Shenzhen, Guangdong 518040 (CN); LI, Huaiqian, Shenzhen, Guangdong 518040 (CN); XIAO, Bin, Shenzhen, Guangdong 518040 (CN); LIU, Zhiheng, Shenzhen, Guangdong 518040 (CN)
(74) Representative: Beder, Jens
(86) International application number: PCT/CN2023/133529
(87) International publication number: WO 2024/174625

(56) References cited:
- CN-A- 110 381 263
- CN-A- 110 445 988
- CN-A- 115 633 262
- US-A1- 2008 089 580
- US-A1- 2017 134 634
- US-A1- 2021 073 957
- US-A1- 2021 281 734
- US-A1- 2022 398 698

## Description

This application claims priority to Chinese Patent Application CN 117 135 293 A (Application No. 202310207723.8), filed with the China National Intellectual Property Administration on February 24, 2023 and entitled "IMAGE PROCESSING METHOD AND ELECTRONIC DEVICE".

### TECHNICAL FIELD

This application relates to the field of images, and in particular, to an image processing method.

### BACKGROUND

With the development of image technologies in electronic devices, users have an increasingly high requirement for a photographing function. For example, when photographing a moving object, the user usually expects the electronic device to capture an image of the moving object at a moment of motion. Because the photographed object moves, the electronic device usually needs to reduce motion blur in the image. In order to reduce the motion blur in the image, the electronic device may usually shorten an exposure time to increase a photosensitivity value. In a photographing scenario whose light source is a flicker light source (for example, a light source with an alternating current of 50 Hz), because the exposure time is shortened, the exposure time does not satisfy an integer multiple of 10 ms. As a result, there is a banding phenomenon in an image captured by the electronic device. For example, the banding phenomenon includes pieces of light and dark banding in the image, or a color cast in a local image region, resulting in poor image quality.

Therefore, when the moving object is photographed, how to improve image quality becomes an urgent problem to be resolved.

With regard to the prior art, reference is made to the patent applications US 2017/134634 A1, US 2022/398698 A1 and US 2021/073957 A1.

### SUMMARY

This application provides an image processing method and an electronic device, to ensure that when an image of a moving photographed object at a moment of motion is captured, banding and/or a color cast image region in an image can be removed, and color overcorrection in the image can be avoided, thereby improving image quality. The invention is defined in the independent claims. Advantageous features of the present invention are defined in the corresponding subclaims. In the following, parts of the description and drawings referring to embodiments, which are not covered by the claims, are not presented as embodiments of the invention but as examples useful for understanding the invention.

According to a first aspect, an image processing method is provided. The method is applied to an electronic device. A light source of a photographing environment in which the electronic device is located is a flicker light source. The image processing method includes:
enabling a camera application;
displaying a first image, where the first image is an image of a photographed object captured based on a first exposure time, the photographed object is a moving object, the first exposure time is shorter than a first duration, and the first image includes banding and/or a color cast image region;
detecting a first operation, where the first operation indicates the electronic device to take a photo or record a video;
capturing a second image in response to the first operation, where the second image is an image of the photographed object captured based on a second exposure time, and the second exposure time is an integer multiple of the first duration;
obtaining a color transformation matrix and/or a brightness parameter based on the first image and the second image, where the color transformation matrix is configured to adjust a color of the first image, and the brightness parameter is configured to represent a gray level of brightness;
performing first image processing on the first image based on the color transformation matrix and/or the brightness parameter, to obtain a third image, where the third image is an image with the banding and/or the color cast image region removed; and
acquiring a first parameter based on brightness information of the second image, where the first parameter is configured to perform lens shading correction processing;
   performing lens shading correction processing on the third image based on the first parameter, to obtain a fourth image; and
displaying or storing the fourth image; and inputting the first image and the second image into an image processing model, to obtain bilateral grid data, wherein the bilateral grid data comprises the color transformation matrix and/or the brightness parameter, and a size of the first image is the same as a size of the second image.

In this embodiment of this application, because the light source of the photographing environment in which the electronic device is located is the flicker light source, when photographing the moving item, the electronic device needs to shorten an exposure time. This results in banding in the image. In this embodiment of this application, the third image with the banding and/or the color cast image region in the first image removed is obtained by transferring color information and the brightness information of the second image (for example, a normal-exposure image) to the first image (for example, a short-exposure image). If LSC processing is performed on the third image based on LSC gain information of the short-exposure image, because the LSC gain information does not match color information and brightness information of the third image, color overcorrection may occur in a fourth image on which LSC processing is performed. In this embodiment of this application, LSC gain information of each frame of exposure image may be acquired based on the statistical information. Therefore, when LSC processing is performed on the third image, LSC processing may be performed on the third image based on the LSC gain information of the second image, to enable the LSC gain information to match the third image. This avoids color overcorrection in the fourth image on which LSC processing is performed. In conclusion, in this embodiment of this application, when an image of a moving photographed object at a moment of motion is captured, it can be ensured that banding and/or a color cast image region in an image are/is removed, and color overcorrection in the image is avoided, thereby improving image quality. With reference to the first aspect, in some implementations of the first aspect, the brightness information of the second image includes: data of a brightness channel of the second image or a brightness value of a pixel point in the second image.

In this embodiment of this application, the image processing model may obtain a bilateral grid by transferring color and brightness of an image frame with a normal-exposure time or a long-exposure time to an image frame with a short-exposure time. In a photographing scenario with a flicker light source with an alternating current of 50 Hz, because the normal-exposure time or the long-exposure time is an integer multiple of 10 ms, there is no banding and color cast image region in the long-exposure image and the normal-exposure image. The color transformation matrix and/or the brightness parameter are/is obtained based on the bilateral grid output by the image processing model. When the image processing model performs color transfer and brightness transfer on the first image, a difference between image content of the first image and image content of the second image may be identified. Therefore, when the color and/or the brightness of the first image are/is adjusted based on the color transformation matrix and/or the brightness parameter obtained by the image processing model, no ghost region is introduced, and image quality is improved.

With reference to the first aspect, in some implementations of the first aspect, the performing first image processing on the first image based on the color transformation matrix and/or the brightness parameter, to obtain a third image includes:
performing interpolation processing on the first image based on the color transformation matrix and/or the brightness parameter, to obtain the third image.

In a possible implementation, the color transformation matrix and/or the brightness parameter may be multiplied by a matrix of the first image to obtain the third image.

With reference to the first aspect, in some implementations of the first aspect, the performing interpolation processing on the first image based on the color transformation matrix and/or the brightness parameter, to obtain the third image includes:
performing, in first color space, first image processing on the first image based on the color transformation matrix and/or the brightness parameter, to obtain a processed image; and
performing, in the first color space, second image processing on the processed image, to obtain the third image, where second image processing is a color processing algorithm in the first color space.

In this embodiment of this application, when an image signal processor processes a Raw image captured by the electronic device and performs an algorithm in the first color space, the image signal processor may perform first image processing on the first image based on the color transformation matrix and/or the brightness parameter first, and then may perform other algorithms in the first color space. Because first image processing is capable of obtaining the image with the banding and/or the color cast image region removed, first image processing is capable of performing color and brightness correction on the image. When accuracy of the color and the brightness is high, that the another algorithm of the first color space is executed can ensure that another algorithm process of the first color space is performed, based on the high accuracy of the color and the brightness of the image, on the image with banding and/or a color cast image region removed, thereby improving the image quality.

With reference to the first aspect, in some implementations of the first aspect, the lens shading correction processing includes color shading correction and brightness shading correction, and the acquiring a first parameter based on brightness information of the second image includes:
obtaining a calibration parameter for lens shading correction based on the brightness information of the second image;
multiplying the calibration parameter for lens shading correction by a pixel point in the second image, to obtain a processed second image;
obtaining a second parameter based on statistical information of the processed second image, where the statistical information of the second image includes a brightness histogram of the processed second image or a brightness gradient map of the processed second image, and the second parameter is configured to perform color shading correction; and
multiplying the calibration parameter for lens shading correction by the second parameter, to obtain the first parameter, where the first parameter is configured to perform color shading correction and brightness shading correction.

With reference to the first aspect, in some implementations of the first aspect, before the capturing a second image, the method further includes:
detecting the photographing scenario in which the electronic device is located, and detecting the moving object; and
detecting that there are/is the banding and/or the color cast image region in the first image.

With reference to the first aspect, in some implementations of the first aspect, a magnitude of the first duration is obtained based on a number of times that the flicker light source flickers per second.

With reference to the first aspect, in some implementations of the first aspect, the first duration = 1000/the number of times that the flicker light source flickers per second.

In a possible implementation, the number of times that the flicker light source flickers per second is related to a frequency of a working voltage of the flicker light source.

In a possible implementation, if a frequency of the working voltage of the flicker light source is 50 Hz, that is, if the number of times that the flicker light source flickers per second is 100, the first duration is 10 ms. In this case, an exposure time of the first image is less than 10 ms, and an exposure time of the second image is an integer multiple of 10 ms.

In a possible implementation, if the frequency of the working voltage of the flicker light source is 60 Hz, that is, if the number of times that the flicker light source flickers per second is 120, the first duration is 8.3 ms. In this case, the exposure time of the first image is less than 8.3 ms, and the exposure time of the second image is an integer multiple of 8.3 ms.

With reference to the first aspect, in some implementations of the first aspect, the image processing model is a convolutional neuron network.

With reference to the first aspect, in some implementations of the first aspect, the image processing model is trained by the following methods:
acquiring sample data, where the sample data includes a first sample image, a second sample image, and a third sample image, the second sample image includes image content and banding and/or a color cast image region in the first sample image, the third sample image has same image content as the first sample image, and image quality of the third sample image is higher than image quality of the first sample image;
inputting the first sample image and the second sample image to a to-be-trained image processing model, to obtain predicted bilateral grid data;
performing interpolation processing on the second sample image based on the predicted bilateral grid data, to obtain a predicted image; and
training the to-be-trained image processing model based on a difference between the predicted image and the third sample image, to obtain the image processing model.

In a possible implementation, the electronic device includes an image signal processor, and the first image is an image output by the image signal processor.

In a possible implementation, the second image is an image obtained by performing third image processing on a Raw image captured by the electronic device, and the third image processing includes color space transformation processing.

According to a second aspect, an image processing method. The method is applied to an electronic device. A light source of a photographing environment in which the electronic device is located is a flicker light source. The image processing method includes:
enabling a camera application;
displaying a first image, where the first image is an image of a photographed object captured based on a first exposure time, the photographed object is a moving object, the first exposure time is shorter than a first duration, and the first image includes banding and/or a color cast image region;
detecting a first operation, where the first operation indicates the electronic device to take a photo or record a video;
capturing a second image in response to the first operation, where the second image is an image of the photographed object captured based on a second exposure time, and the second exposure time is an integer multiple of the first duration;
acquiring a first parameter based on brightness information of the second image, where the first parameter is configured to perform lens shading correction processing;
performing lens shading correction processing on the second image based on the first parameter, to obtain a fifth image; and
obtaining a color transformation matrix and/or a brightness parameter based on the first image and the fifth image, where the color transformation matrix is configured to adjust a color of the first image, and the brightness parameter is configured to represent a gray level of brightness;
performing first image processing on the first image based on the color transformation matrix and/or the brightness parameter, to obtain a fourth image, where the fourth image is an image with the banding and/or the color cast image region removed; and
displaying or storing the fourth image; and inputting the first image and the fifth image into an image processing model, to obtain bilateral grid data, wherein the bilateral grid data comprises the color transformation matrix and/or the brightness parameter, and a size of the first image is the same as a size of the fifth image.

In this embodiment of this application, if LSC processing is performed on the second image (for example, a normal-exposure image) based on LSC gain information of the first image (for example, a short-exposure image), because LSC gain information of the short-exposure image does not match color information and brightness information of the normal-exposure image, color overcorrection of the normal-exposure image may occur in the normal-exposure image on which LSC processing is performed. In this embodiment of this application, the LSC gain information (for example, the first parameter) of the normal-exposure image based on statistical information of brightness of the second image. Therefore, when LSC processing is performed on the second image based on the first parameter, the LSC gain information is enabled to match the second image, to enable the LSC gain information to match the second image. This avoids color overcorrection in the image on which LSC processing is performed. In addition, because there are no pieces of light and dark banding and local color cast in the fifth image, pieces of light and dark banding and the local color cast in the first image may be removed by transferring color information and brightness information of the fifth image to the first image, to obtain the fourth image. It may be understood that the fourth image includes the image content information of the first image, and the color information and the brightness information of the fifth image. In conclusion, in this embodiment of this application, when an image of a moving photographed object at a moment of motion is captured, it can be ensured that banding and/or a color cast image region in an image are/is removed, and color overcorrection in the image is avoided, thereby improving image quality.

With reference to the second aspect, in some implementations of the second aspect, the brightness information of the second image includes: data of a brightness channel of the second image or a brightness value of a pixel point in the second image.

With reference to the second aspect, in some implementations of the second aspect, the first image is an image on which lens shading correction processing is performed based on the first parameter.

In a possible implementation, the first image is an image on which image processing is performed based on a short-exposure Raw image captured by the electronic device, and image processing includes lens shading correction processing performed based on the first parameter.

In this embodiment of this application, the image processing model may obtain a bilateral grid by transferring color and brightness of an image frame with a normal-exposure time or a long-exposure time to an image frame with a short-exposure time. In a photographing scenario with a flicker light source with an alternating current of 50 Hz, because the normal-exposure time or the long-exposure time is an integer multiple of 10 ms, there is no banding and color cast image region in the long-exposure image and the normal-exposure image. The color transformation matrix and/or the brightness parameter are/is obtained based on the bilateral grid output by the image processing model. When the image processing model performs color transfer and brightness transfer on the first image, a difference between image content of the first image and image content of the fifth image may be identified. Therefore, when the color and/or the brightness of the first image are/is adjusted based on the color transformation matrix and/or the brightness parameter obtained by the image processing model, no ghost region is introduced, and image quality is improved.

With reference to the second aspect, in some implementations of the second aspect, the performing first image processing on the first image based on the color transformation matrix and/or the brightness parameter, to obtain a fourth image includes:
performing interpolation processing on the first image based on the color transformation matrix and/or the brightness parameter, to obtain the fourth image.

With reference to the second aspect, in some implementations of the second aspect, the performing interpolation processing on the first image based on the color transformation matrix and/or the brightness parameter, to obtain the fourth image includes:
performing, in first color space, first image processing on the first image based on the color transformation matrix and/or the brightness parameter, to obtain a processed image; and
performing, in the first color space, second image processing on the processed image, to obtain the fourth image, where second image processing is a color processing algorithm in the first color space.

With reference to the second aspect, in some implementations of the second aspect, the lens shading correction processing includes color shading correction and brightness shading correction, and the acquiring a first parameter based on brightness information of the second image includes:
obtaining a calibration parameter for lens shading correction based on the brightness information of the second image;
multiplying the calibration parameter for lens shading correction by a pixel point in the second image, to obtain a processed second image;
obtaining a second parameter based on statistical information of the processed second image, where the statistical information of the second image includes a brightness histogram of the processed second image or a brightness gradient map of the processed second image, and the second parameter is configured to perform color shading correction; and
multiplying the calibration parameter for lens shading correction by the second parameter, to obtain the first parameter, where the first parameter is configured to perform color shading correction and brightness shading correction.

With reference to the second aspect, in some implementations of the second aspect, before the capturing a second image, the method further includes:
detecting the photographing scenario in which the electronic device is located, and detecting the moving object; and
detecting that there are/is banding and/or the color cast image region in the first image.

With reference to the second aspect, in some implementations of the second aspect, a magnitude of the first duration is obtained based on a number of times that the flicker light source flickers per second.

With reference to the second aspect, in some implementations of the second aspect, the first duration = 1000/the number of times that the flicker light source flickers per second.

In a possible implementation, the number of times that the flicker light source flickers per second is related to a frequency of a working voltage of the flicker light source.

With reference to the second aspect, in some implementations of the second aspect, the image processing model is a convolutional neural network.

With reference to the second aspect, in some implementations of the second aspect, the image processing model is trained by the following methods:
acquiring sample data, where the sample data includes a first sample image, a second sample image, and a third sample image, the second sample image includes image content and banding and/or a color cast image region in the first sample image, the third sample image has same image content as the first sample image, and image quality of the third sample image is higher than image quality of the first sample image;
inputting the first sample image and the second sample image to a to-be-trained image processing model, to obtain predicted bilateral grid data;
performing interpolation processing on the second sample image based on the predicted bilateral grid data, to obtain a predicted image; and
training the to-be-trained image processing model based on a difference between the predicted image and the third sample image, to obtain the image processing model.

In a possible implementation, the electronic device includes an image signal processor, and the first image is an image output by the image signal processor.

In a possible implementation, the second image is an image obtained by performing third image processing on a Raw image captured by the electronic device, and the third image processing includes color space transformation processing.

According to an example, an electronic device is provided. The electronic device includes one or more processors and a memory. The memory is coupled to the one or more processors, the memory is configured to store computer program code, the computer program code includes computer instructions, and the one or more processors invoke the computer instructions, to enable the electronic device to perform:
enabling a camera application;
displaying a first image, where the first image is an image of a photographed object captured based on a first exposure time, the photographed object is a moving object, the first exposure time is shorter than a first duration, and the first image includes banding and/or a color cast image region;
detecting a first operation, where the first operation indicates the electronic device to take a photo or record a video;
capturing a second image in response to the first operation, where the second image is an image of the photographed object captured based on a second exposure time, and the second exposure time is an integer multiple of the first duration;
obtaining a color transformation matrix and/or a brightness parameter based on the first image and the second image, where the color transformation matrix is configured to adjust a color of the first image, and the brightness parameter is configured to represent a gray level of brightness;
performing first image processing on the first image based on the color transformation matrix and/or the brightness parameter, to obtain a third image, where the third image is an image with the banding and/or the color cast image region removed; and
acquiring a first parameter based on brightness information of the second image, where the first parameter is configured to perform lens shading correction processing;
performing lens shading correction processing on the third image based on the first parameter, to obtain a fourth image; and
displaying or storing the fourth image.

Optionally, the one or more processors are further configured to invoke the computer instructions to cause the electronic device to perform the image processing method in any implementation of the first aspect.

According to an example, an electronic device is provided. The electronic device includes one or more processors and a memory. The memory is coupled to the one or more processors, the memory is configured to store computer program code, the computer program code includes computer instructions, and the one or more processors invoke the computer instructions, to enable the electronic device to perform:
enabling a camera application;
displaying a first image, where the first image is an image of a photographed object captured based on a first exposure time, the photographed object is a moving object, the first exposure time is shorter than a first duration, and the first image includes banding and/or a color cast image region;
detecting a first operation, where the first operation indicates the electronic device to take a photo or record a video;
capturing a second image in response to the first operation, where the second image is an image of the photographed object captured based on a second exposure time, and the second exposure time is an integer multiple of the first duration;
acquiring a first parameter based on brightness information of the second image, where the first parameter is configured to perform lens shading correction processing;
performing lens shading correction processing on the second image based on the first parameter, to obtain a fifth image; and
obtaining a color transformation matrix and/or a brightness parameter based on the first image and the fifth image, where the color transformation matrix is configured to adjust a color of the first image, and the brightness parameter is configured to represent a gray level of brightness;
performing first image processing on the first image based on the color transformation matrix and/or the brightness parameter, to obtain a fourth image, where the fourth image is an image with the banding and/or the color cast image region removed; and
displaying or storing the fourth image.

Optionally, the one or more processors are further configured to invoke the computer instructions to cause the electronic device to perform the image processing method in any implementation of the second aspect.

According to an example, an electronic device is provided, including modules/units configured to perform the image processing method according to any one of the first aspect or the implementations of the first aspect.

According to an example, an electronic device is provided, including modules/units configured to perform the image processing method according to any one of the second aspect or the implementations of the second aspect.

According to an example, an electronic device is provided. The electronic device includes one or more processors and a memory. The memory is coupled to the one or more processors. The memory is configured to store computer program code. The computer program code includes computer instructions. The one or more processors invoke the computer instructions, to enable the electronic device to perform the image processing method according to any aspect (for example, the first aspect or the second aspect) or any implementation of any aspect.

According to an example, a chip system is provided. The chip system is used in an electronic device. The chip system includes one or more processors. The processors are configured to invoke computer instructions, to enable the electronic device to perform the image processing method according to any aspect or any implementation of any aspect.

According to an example, a computer-readable storage medium is provided. The computer-readable storage medium has computer program code stored thereon, and when the computer program code is executed by an electronic device, the electronic device is enabled to perform the image processing method according to any one aspect or any implementation of any aspect.

According to an example, a computer program product is provided. The computer program product includes computer program code. When the computer program code is run by an electronic device, the electronic device is enabled to perform the image processing method according to any aspect or any implementation of any aspect.

In this embodiment of this application, because the light source of the photographing environment in which the electronic device is located is the flicker light source, when photographing the moving item, the electronic device needs to shorten an exposure time. This results in banding in the image. In this embodiment of this application, the third image with the banding and/or the color cast image region in the first image removed is obtained by transferring color information and the brightness information of the second image (for example, a normal-exposure image) to the first image (for example, a short-exposure image). If LSC processing is performed on the third image based on LSC gain information of the short-exposure image, because the LSC gain information does not match color information and brightness information of the third image, color overcorrection may occur in a fourth image on which LSC processing is performed. In this embodiment of this application, LSC gain information of each frame of exposure image may be acquired based on the statistical information. Therefore, when LSC processing is performed on the third image, LSC processing may be performed on the third image based on the LSC gain information of the second image, to enable the LSC gain information to match the third image. This avoids color overcorrection in the fourth image on which LSC processing is performed. In conclusion, in this embodiment of this application, when an image of a moving photographed object at a moment of motion is captured, it can be ensured that banding and/or a color cast image region in an image are/is removed, and color overcorrection in the image is avoided, thereby improving image quality.

### BRIEF DESCRIPTION OF DRAWINGS

FIG. 1 is a schematic diagram of lens shading correction;
FIG. 2 is a schematic diagram of a hardware system of an electronic device to which this application is applicable;
FIG. 3 is a diagram of a software system of an electronic device applied to this application;
FIG. 4 is a schematic diagram of an application scenario to which an embodiment of this application is applicable to;
FIG. 5 is a schematic diagram of a graphical user interface applicable to an embodiment of this application;
FIG. 6 is a schematic diagram of gain information about LSC processing according to an embodiment of this application;
FIG. 7 is a schematic flowchart of a processing method of an image signal processor according to an embodiment of this application;
FIG. 8 is a schematic flowchart of an image processing method according to an embodiment of this application;
FIG. 9 is a schematic diagram of gain information about LSC processing according to an embodiment of this application;
FIG. 10 is a schematic flowchart of another image processing method according to an embodiment of this application;
FIG. 11 is a schematic flowchart of another image processing method according to an embodiment of this application;
FIG. 12 is a schematic flowchart of another image processing method according to an embodiment of this application;
FIG. 13A and FIG. 13B are a schematic diagram of a graphical user interface applicable to an embodiment of this application;
FIG. 14 is a schematic diagram of a graphical user interface applicable to an embodiment of this application;
FIG. 15A to FIG. 15D are a schematic diagram of a graphical user interface applicable to an embodiment of this application;
FIG. 16 is a schematic diagram of a graphical user interface applicable to an embodiment of this application;
FIG. 17A to FIG. 17D are a schematic diagram of a graphical user interface applicable to an embodiment of this application;
FIG. 18 is a schematic diagram of a structure of an electronic device according to an embodiment of this application; and
FIG. 19 is a schematic diagram of a structure of an electronic device according to an embodiment of this application.

### DESCRIPTION OF EMBODIMENTS

In embodiments of this application, the following terms such as "first" and "second" are merely used for description, and should not be understood as indicating or implying relative importance or implicitly indicating a quantity of technical features that are indicated. Therefore, features defining "first" and "second" may explicitly or implicitly include one or more such features. In the description of embodiments, unless otherwise specified, "a plurality of" means two or more.

For ease of understanding of embodiments of this application, first, a brief description of the related concepts involved in embodiments of this application is provided.

### 1. Flicker (flicker)

Energy transmitted in an alternating current power network is not stable and unchanged, but changes with a fixed frequency. This frequency is generally called power frequency. A change in energy due to the power frequency is a flicker.

### 2. Banding (banding)

In a photographing environment of a flicker light source, a phenomenon that an image sensor in an electronic device captures a flicker and banding formed on an image is called a banding phenomenon, usually referred to as banding.

For example, for an alternating current of 50 Hz, that is, a charged light source flickering 100 times per second, if the exposure time of the electronic device satisfies the integer multiple of 10 ms, an exposure integration period may offset the banding; or if the exposure time of the electronic device does not satisfy the integer multiple of 10 ms, a light inlet amount during capturing of the image may fluctuate according to an alternating current sine wave pattern, resulting in regular banding in the image.

### 3. Lens shading correction (lens shading correction, LSC)

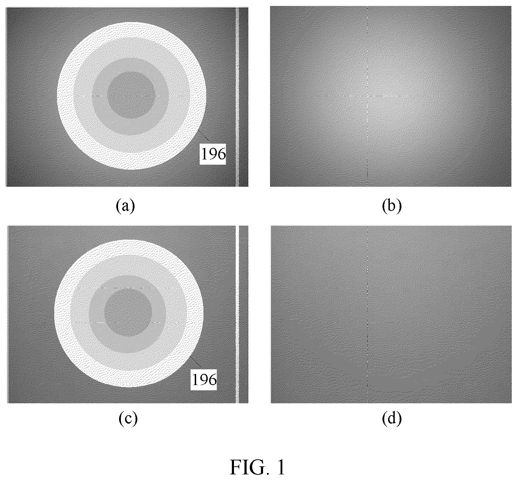

Lens shading correction means correction of lens shading. Lens shading means a phenomenon of uneven image brightness and/or an image color caused by an optical feature of a lens, as shown in part (a) of FIG. 1. In part (a) of FIG. 1, an image region 196 represents a region with uneven image colors. LSC may usually include both brightness shading (luma shading) correction and color shading (color shading) correction. Brightness shading correction is a phenomenon that an image gradually darkens from a center to a periphery because light received at an edge of an image sensor is weaker than light received a center of the image sensor, as shown in part (b) of FIG. 1. Color shading is a phenomenon that an image gradually darkens from a center to a periphery because the cut-off frequency of an IR-cut filter (IR-cut filter) is different when the IR-cut filter is used and an incident light angle is different, a chief ray angle (Chief Ray Angle, CRA) of the image sensor does not match a CRA of the lens, or a device is mounted incorrectly, shown in part (c) of FIG. 1. After LSC is performed, uneven brightness and uneven color of the image are resolved, as shown in part (d) of FIG. 1.

### 4. Bilateral grid (bilateral grid)

A bilateral grid is essentially a data structure. For example, for a single-channel grayscale value, the bilateral grid may be a three-dimensional array obtained by combining two-dimensional spatial domain information and one-dimensional grayscale information of an image.

### 5. Exposure time

An exposure time means a time for light to hit a film or photoreceptor from when a camera shutter opens to when the camera shutter closes.

### 6. Neural network

The neural network is a network formed by connecting a plurality of individual neural units together, that is, an output of one neural unit may be an input of another neural unit. An input of each neural unit can be connected to a local receptive field of a previous layer, to extract a feature of the local receptive field. The local receptive field may be a region including several neural units.

### 7. Convolutional neuron network (convolutional neuron network, CNN)

A convolutional neuron network is a deep neural network with a convolutional structure. The convolutional neuron network includes a feature extractor including a convolutional layer and a subsampling layer, where the feature extractor may be considered as a filter. The convolutional layer means a neuron layer that convolves an input signal in the convolutional neuron network. In the convolutional layer of the convolutional neuron network, a neuron may be connected to only some neurons of an adjacent layer. The convolutional layer usually includes several feature maps. Each feature map may include some neural units arranged in a rectangular. Neural units of the same feature map share a weight. The shared weight herein is a convolution kernel. Sharing a weight may be understood as a manner of extracting image information and is unrelated to positions. The convolution kernel may be initialized in the form of a matrix of a random size. During training of the convolutional neuron network, the convolution kernel may obtain a proper weight by learning. In addition, a direct benefit of sharing a weight is to reduce connections between the layers of the convolutional neuron network while reducing a risk of overfitting.

### 8. HDRnet

HDRnet is a typical 3D interpolation grid. For example, the interpolation grid may be divided into 16 x 16 in a spatial domain and into 8 ranges in a value domain.

### 9. Back propagation algorithm

A neural network may use an error back propagation (back propagation, BP) algorithm to correct values of parameters in an initial neural network model in a training process, to reduce a reconstruction error loss of the neural network model. Specifically, an error loss is generated if an input signal is transmitted forward until the input signal is output, and a parameter in the initial neural network model is updated through back propagation error loss information, so that the error loss converges. The back propagation algorithm is a back propagation movement dominated by an error loss, and aims to obtain an optimal parameter of the neural network model, such as a weight matrix.

The following describes an image processing method and an electronic device provided in embodiments of this application with reference to the accompanying drawings.

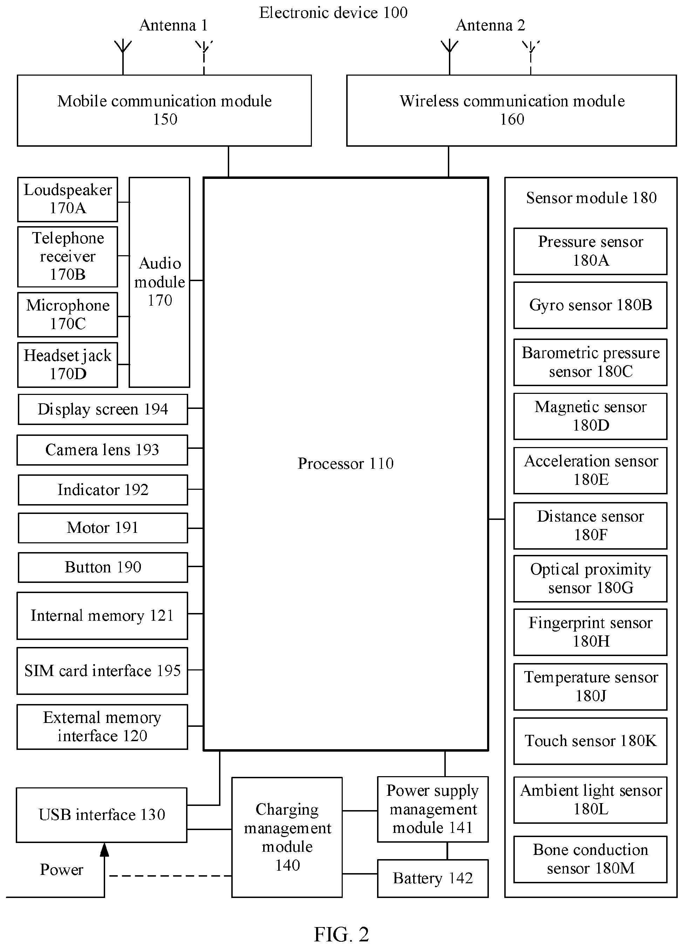

FIG. 2 shows a hardware system of an electronic device applied to this application.

For example, an electronic device 100 may be a mobile phone, a smartscreen, a tablet computer, a wearable electronic device, an in-vehicle electronic device, an augmented reality (augmented reality, AR) device, a virtual reality (virtual reality, VR) device, a notebook computer, an ultra-mobile personal computer (ultra-mobile personal computer, UMPC), a netbook, a personal digital assistant (personal digital assistant, PDA), a projector, or the like. A specific type of the electronic device 100 is not limited in this embodiment of this application.

For example, the electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, and an audio module 170, a loudspeaker 170A, a receiver 170B, a microphone 170C, a headset jack 170D, a sensor module 180, a button 190, a motor 191, an indicator 192, a camera 193, a display screen 194, a subscriber identification module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It should be noted that a structure shown in FIG. 2 does not constitute a specific limitation on the electronic device 100. In some other embodiments of this application, the electronic device 100 may include more or fewer components than those shown in FIG. 2, the electronic device 100 may include a combination of some of the components shown in FIG. 2, or the electronic device 100 may include subcomponents of some of the components shown in FIG. 2. The components shown in FIG. 2 may be implemented by hardware, software, or a combination of software and hardware.

The processor 110 may include one or more processing units. For example, the processor 110 may include at least one of the following processing units: an application processor (application processor, AP), a modem processor, a graphics processing unit (graphics processing unit, GPU), an image signal processor (image signal processor, ISP), a controller, a video coder and decoder, a digital signal processor (digital signal processor, DSP), a baseband processor, a neural-network processing unit (neural-network processing unit, NPU). Different processing units may be independent devices, or may be an integrated device. The controller may generate an operation control signal based on instruction operation code and a timing signal, to complete control of fetching an instruction and executing the instruction.

A memory may also be disposed in the processor 110, and is configured to store instructions and data. In some embodiments the memory in processor 110 is a cache memory. The memory may store instructions or data that is just used or used cyclically by the processor 110. If the processor 110 needs to use the instructions or the data again, the processor may directly invoke the instructions or the data from the memory. This avoids repeated access and reduces a waiting time of the processor 110, thereby improving system efficiency.

In some embodiments, the processor 110 may include one or more interfaces. For example, the processor 110 may include at least one of the following interfaces: an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a SIM interface, and a USB interface.

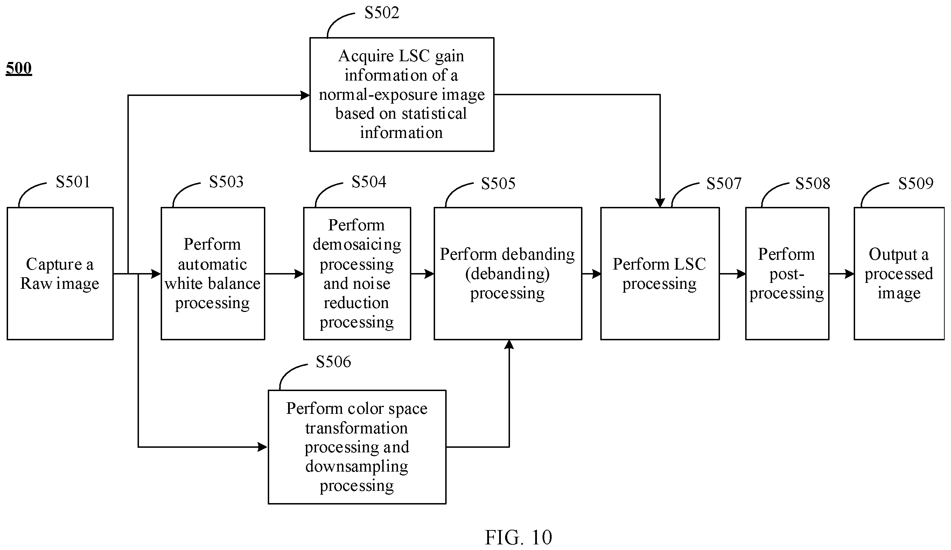

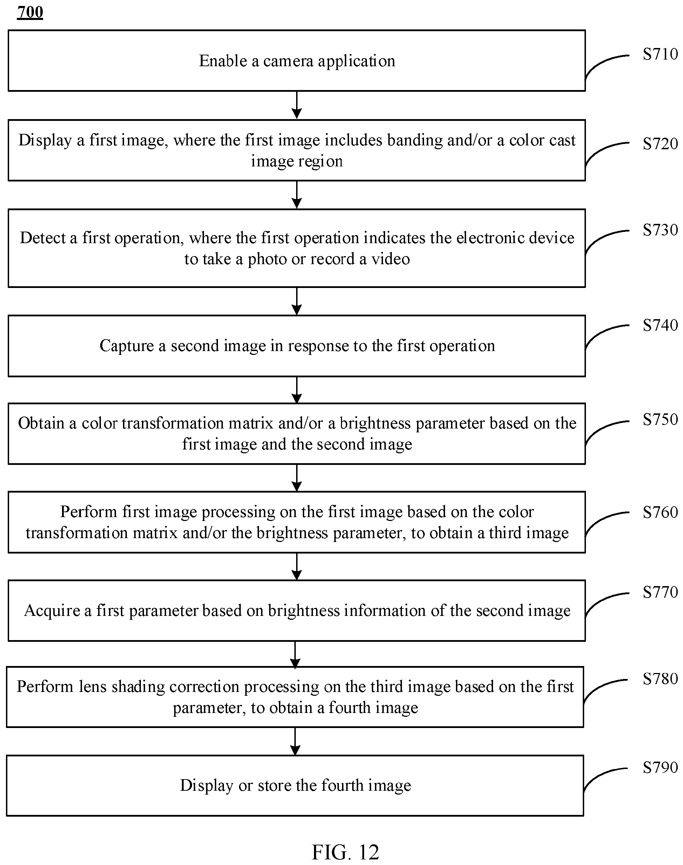

For example, in this embodiment of this application, the processor 110 may be configured to perform the image processing method provided in embodiments of this application, for example, enabling a camera application; displaying a first image, where the first image is an image of a photographed object captured based on a first exposure time, the photographed object is a moving object, the first exposure time is shorter than a first duration, and the first image includes banding and/or a color cast image region; detecting a first operation, where the first operation indicates the electronic device to take a photo or record a video; capturing a second image in response to the first operation, where the second image is an image of the photographed object captured based on a second exposure time, and the second exposure time is an integer multiple of the first duration; obtaining a color transformation matrix and/or a brightness parameter based on the first image and the second image, where the color transformation matrix is configured to adjust a color of the first image, and the brightness parameter is configured to represent a gray level of brightness; performing first image processing on the first image based on the color transformation matrix and/or the brightness parameter, to obtain a third image, where the third image is an image with the banding and/or the color cast image region removed; and acquiring a first parameter based on brightness information of the second image, where the first parameter is configured to perform lens shading correction processing; performing lens shading correction processing on the third image based on the first parameter, to obtain a fourth image; and displaying or storing the fourth image. Optionally, for descriptions, refer to FIG. 10 or FIG. 12 below.

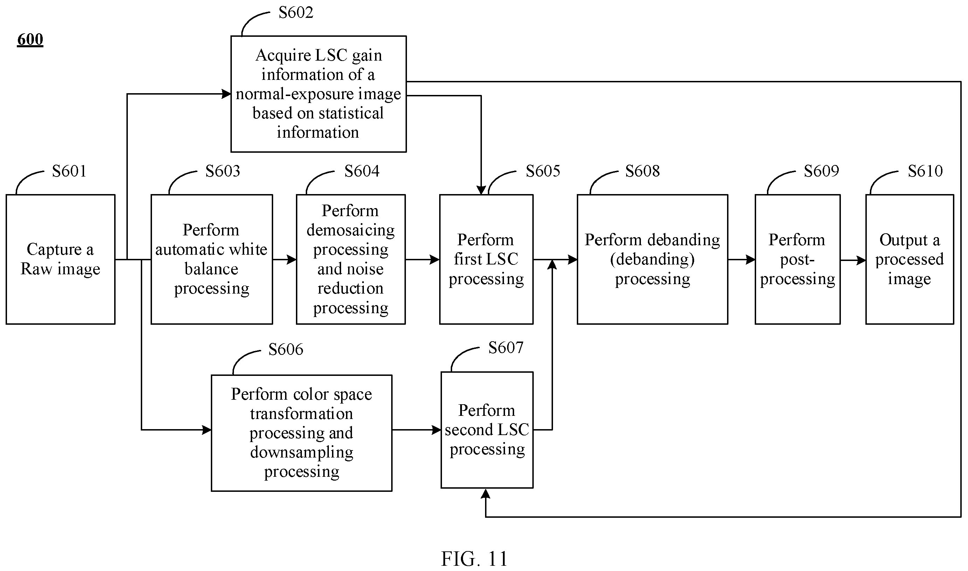

For example, in this embodiment of this application, the processor 110 may be configured to perform the image processing method provided in embodiments of this application, for example, enabling a camera application; displaying a first image, where the first image is an image of a photographed object captured based on a first exposure time, the photographed object is a moving object, the first exposure time is shorter than a first duration, and the first image includes banding and/or a color cast image region; detecting a first operation, where the first operation indicates the electronic device to take a photo or record a video; capturing a second image in response to the first operation, where the second image is an image of the photographed object captured based on a second exposure time, and the second exposure time is an integer multiple of the first duration; acquiring a first parameter based on brightness information of the second image, where the first parameter is configured to perform lens shading correction processing; performing lens shading correction processing on the second image based on the first parameter, to obtain a fifth image; and obtaining a color transformation matrix and/or a brightness parameter based on the first image and the fifth image, where the color transformation matrix is configured to adjust a color of the first image, and the brightness parameter is configured to represent a gray level of brightness; performing first image processing on the first image based on the color transformation matrix and/or the brightness parameter, to obtain a fourth image, where the fourth image is an image with the banding and/or the color cast image region removed; and displaying or storing the fourth image. Optionally, for descriptions, refer to FIG. 11 below.

A connection relationship between the modules shown in FIG. 2 is merely an example for description, and does not constitute a limitation on a connection relationship between the modules of the electronic device 100. Optionally, the modules of the electronic device 100 may alternatively use a combination of a plurality of connection manners in the foregoing embodiments.

A wireless communication function of the electronic device 100 may be implemented by using devices such as the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna of the electronic device 100 may be configured to cover one or more communication frequency bands. Different antennas may also be multiplexed to improve utilization of the antennas. For example, the antenna 1 may be multiplexed into a diversity antenna of a wireless local region network. In some other embodiments, the antennas may be used in combination with a tuning switch.

The electronic device 100 can implement a display function by using the GPU, the display screen 194, and the application processor. The GPU is a microprocessor for image processing and connects the display screen 194 to the application processor. The GPU is configured to perform mathematical and geometric computing for graphics rendering. The processor 110 may include one or more GPUs that perform program instructions to generate or change display information.

The display screen 194 may be configured to display an image or a video.

Optionally, the display screen 194 may be configured to display an image or a video. The display screen 194 may include a display panel. The display panel may use a liquid crystal display (liquid crystal display, LCD) screen, an organic light-emitting diode (organic light-emitting diode, OLED), an active-matrix organic light-emitting diode (active-matrix organic light-emitting diode, AMOLED), a flex light-emitting diode (flex light-emitting diode, FLED), a mini light-emitting diode (mini light-emitting diode, Mini LED), a micro light-emitting diode (micro light-emitting diode, Micro LED), a micro OLED (Micro OLED), or a quantum dot light emitting diodes (quantum dot light emitting diode, QLED). In some embodiments, the electronic device 100 may include 1 or N display screens 194, where N is a positive integer greater than 1.

For example, the electronic device 100 may implement a photographing function by using the ISP, the camera 193, the coder and decoder, the GPU, the display screen 194, the application processor, and the like.

For example, the ISP is configured to process data fed back by the camera 193. For example, when a photo is taken, a shutter is enabled. Light is transferred to a camera photosensitive element by a camera, and an optical signal is converted into an electrical signal. The camera photosensitive element transfers the electrical signal to the ISP for processing, and therefore, the electrical signal is converted into an image visible to a naked eye. The ISP may perform algorithm optimization on noise, brightness, and a color of the image, and the ISP may further optimize parameters such as exposure and a color temperature of a photographing scenario. In some embodiments, the ISP may be provided in the camera 193.

For example, the camera 193 (also referred to as a lens) is configured to capture a still image or a video, and may be enabled through triggering by using an application instruction, to implement a photographing function, for example, obtaining an image of any scenario through photographing. The camera may include parts such as an imaging lens, a light filter, and an image sensor. Light emitted or reflected by an object enters the imaging lens, passes through the light filter, and finally converges on the image sensor. The imaging lens is mainly configured to perform converging and imaging on light emitted or reflected by all objects (which may also be referred to as a to-be-photographed scenario or a target scenario, or may be understood as a scenario image expected to be photographed by the user) in a camera angle. The filter is mainly configured to filter out excess light waves (for example, light waves other than visible light, such as infrared) in light. The image sensor may be a charge coupled device (charge coupled device, CCD) or a complementary metal-oxide-semiconductor (complementary metal-oxide-semiconductor, CMOS) phototransistor. The image sensor is mainly configured to perform photoelectric conversion on a received optical signal to convert the received optical signal into an electrical signal, and then transmit the electrical signal to the ISP to convert the electrical signal into a digital image signal. The ISP outputs the digital image signal to the DSP for processing. The DSP converts the digital image signal into an image signal in a standard format, for example, RGB or YUV.

For example, the digital signal processor is configured to process a digital signal, and can process another digital signal in addition to the digital image signal. For example, when the electronic device 100 selects a frequency, the digital signal processor is configured to perform Fourier transform and the like on frequency energy.

For example, the video coder and decoder are configured to compress or decompress a digital video. The electronic device 100 can support one or more types of video coders and decoders. In this way, the electronic device 100 may play or record videos in a plurality of encoding formats, for example, moving picture experts group (moving picture experts group, MPEG) 1, MPEG2, MPEG3, and MPEG4.

For example, the gyro sensor 180B may be configured to determine a motion posture of the electronic device 100. In some embodiments, angular velocities of the electronic device 100 around three axes (that is, x-axis, y-axis, and z-axis) may be determined by using the gyro sensor 180B. The gyro sensor 180B may be configured to implement image stabilization during photographing. For example, when the shutter is pressed, the gyro sensor 180B detects an angle at which the electronic device 100 jitters, calculates, based on the angle, a distance for which a lens module needs to compensate, and allows the lens to offset the jitter of the electronic device 100 by performing reverse motion, to implement image stabilization. The gyro sensor 180B may be further used in scenarios such as navigation and a motion sensing game.

For example, the acceleration sensor 180E may detect acceleration of the electronic device 100 in all directions (generally in the x-axis, the y-axis, and the z-axis). When the electronic device 100 is still, a magnitude and direction of gravity may be detected. The acceleration sensor 180E may be further configured to identify an attitude of the electronic device 100 as an input parameter of an application such as switching between horizontal and vertical screens or a pedometer.

For example, the distance sensor 180F is configured to measure a distance. The electronic device 100 may measure a distance by infrared light or laser. In some embodiments, for example, in a photographing scenario, the electronic device 100 may measure a distance by using the distance sensor 180F, to implement quick focusing.

For example, the ambient light sensor 180L is configured to sense ambient light brightness. The electronic device 100 may adaptively adjust brightness of the display screen 194 based on the perceived ambient light brightness. The ambient light sensor 180L may be further configured to automatically adjust white balance during photographing. The ambient light sensor 180L may also cooperate with the optical proximity sensor 180G to detect whether the electronic device 100 is in a pocket, to prevent an accidental touch.

For example, the fingerprint sensor 180H is configured to collect a fingerprint. The electronic device 100 may use a feature of the acquired fingerprint to implement functions such as unlocking, accessing an application lock, photographing, and receiving a call.

For example, the touch sensor 180K is also referred to as a touch device. The touch sensor 180K may be disposed on the display screen 194. The touch sensor 180K and the display screen 194 form a touchscreen, and the touchscreen is also referred to as a touch control screen. The touch sensor 180K is configured to detect a touch operation performed on or near the touch sensor. The touch sensor 180K may transfer the detected touch operation to the application processor to determine a type of the touch event. A visual output related to a touch operation may be provided through the display screen 194. In some other embodiments, the touch sensor 180K may alternatively be disposed on a surface of the electronic device 100, at a position different from that of the display screen 194.

The hardware system of the electronic device 100 is described in detail above, and a software system of the electronic device 100 is described below.

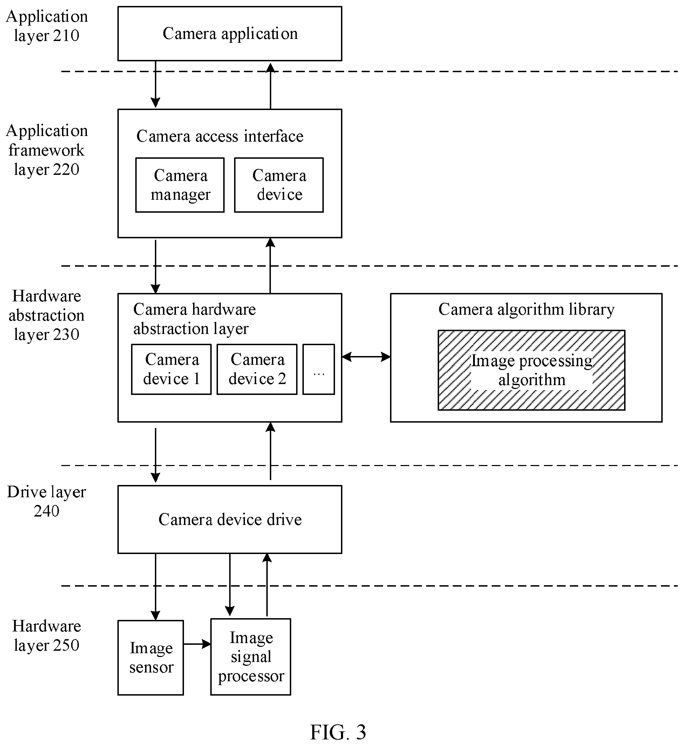

FIG. 3 is a diagram of a software system of an electronic device according to an embodiment of this application.

As shown in FIG. 3, a system architecture may include an application layer 210, an application framework layer 220, a hardware abstraction layer 230, a drive layer 240, and a hardware layer 250.

The application layer 210 may include a camera application.

Optionally, the application layer 210 may further include applications such as Gallery, Calendar, Phone, Maps, Navigation, WLAN, Bluetooth, Music, Video, and Messages.

The application framework layer 220 provides an application programming interface (application programming interface, API) and a programming framework for an application program at the application layer. The application framework layer may include some predefined functions.

For example, the application framework layer 220 may include a camera access interface; and the camera access interface may include camera manager and a camera device. The camera manager may be configured to provide an access interface for camera manager. The camera device may be configured to provide an interface for camera access.

The hardware abstraction layer 230 is configured to abstract hardware. For example, the hardware abstraction layer may include a camera abstraction layer and another hardware device abstraction layer. The camera abstraction layer may include a camera device 1, a camera device 2, and the like. The camera hardware abstraction layer may be connected to a camera algorithm library. The camera hardware abstraction layer may invoke an algorithm in the camera algorithm library.

For example, the camera algorithm library may include an image processing algorithm, and when the image processing algorithm is run, the image processing method provided in this embodiment of this application is performed.

The drive layer 240 is used for providing drive for different hardware devices. For example, the drive layer may include camera device drive.

The hardware layer 250 may include an image sensor, an image signal processor, and another hardware device.

At present, when photographing a moving object, the user usually expects the electronic device to capture an image of the moving object at a moment of motion. Because the photographed object moves, an electronic device usually needs to reduce motion blur in the image. In order to reduce motion blur in the image, the electronic device may usually shorten an exposure time to increase a photosensitivity value. However, in the photographing scenario whose light source is a flicker light source (for example, an alternating current of 50 Hz), because the exposure time is shortened, the exposure time does not satisfy the integer multiple of 10 ms. If the exposure time does not satisfy an integer multiple of 10 ms, there may be banding (banding) in the image captured by the electronic device. That is, there are pieces of light and dark banding in the image. Banding may include Luma banding and Chroma banding. Luma banding means banding generated by shortening an exposure time. Luma banding has only light and dark transformation, without a color change. Chroma banding means a color cast in a local region in an image. A color of the local region in the image does not match an overall color of the image, resulting in a color cast of red, green, or blue. Reasons for Luma banding are as follows: For the photographing scenario with a flicker light source with an alternating current of 50 Hz, if the exposure time of the electronic device is not an integer multiple of 10 ms, a sinusoidal band of an alternating current generated by the flicker light source in the photographing environment may not offset the exposure integration period, resulting in banding with regular brightness in the captured image. Reasons for Chroma banding are as follows: When a change in a voltage of the flicker light source is 10%, a color temperature of the light source changes significantly (for example, approximately 1000K). Imaging of the image is related to the color temperature. When the change in the voltage of the flicker light source is small, the color temperature may change significantly, resulting in a color cast in the image. Therefore, image quality is severely affected by banding in the image.

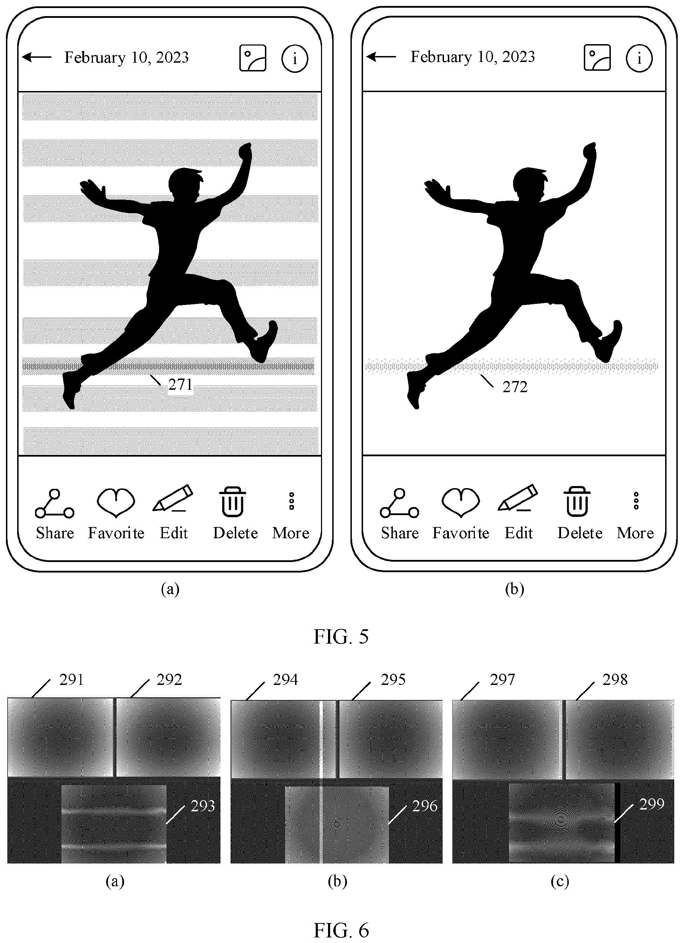

In addition, in an ISP processing process at present, for LSC processing, the electronic device can only obtain LSC gain information of a preview image, or may obtain LSC gain information of a third frame of image before a current frame of image. Because the gain information does not match the image frame when LSC processing is performed, color overcorrection may occur in a debanding image on which LSC processing is performed. For example, an image obtained before debanding processing is performed includes a red color cast and pieces of light and dark banding. After debanding processing and LSC processing are performed, because the gain information does not match the image frame when LSC processing is performed, overall brightness of a processed image is basically the same, but color overcorrection may occur in the image, for example, 272 shown in part (b) of FIG. 5.

For example, FIG. 6 shows a comparison between LSC gain information of a preview image 1 (for example, 3 ms) and LSC gain information of a preview image 2 (for example, 10 ms). As shown in part (a) of FIG. 6, an image 291 represents LSC gain information of a red channel (an R channel) of the preview image 1. An image 292 represents LSC gain information of an R channel of the preview image 2. An image 293 represents difference information between the LSC gain information of the R channel of the preview image 1 and the LSC gain information of the R channel of the preview image 2. When a color in the image 293 is darker, a difference is larger. When a color is lighter, a difference is smaller. It can be learned from the image 293 that the difference between the LSC gain information of the R channel of the preview image 1 and the LSC gain information of the R channel of the preview image 2 is large. As shown in part (b) of FIG. 6, an image 294 represents LSC gain information of a green channel (a G channel) of the preview image 1. An image 295 represents LSC gain information of a G channel of the preview image 2. An image 296 represents difference information between the LSC gain information of the G channel of the preview image 1 and the LSC gain information of the G channel of the preview image 2. When a color in the image 296 is darker, a difference is larger. When a color is lighter, a difference is smaller. It can be learned from the image 296 that the difference between the LSC gain information of the G channel of the preview image 1 and the LSC gain information of the G channel of the preview image 2 is small. As shown in part (c) of FIG. 6, an image 297 represents LSC gain information of a blue channel (a B channel) of the preview image 1. An image 298 represents LSC gain information of a B channel of the preview image 2. An image 299 represents difference information between the LSC gain information of the B channel of the preview image 1 and the LSC gain information of the B channel of the preview image 2. When a color in the image 299 is darker, a difference is larger. When a color is lighter, a difference is smaller. It can be learned from the image 299 that the difference between the LSC gain information of the B channel of the preview image 1 and the LSC gain information of the B channel of the preview image 2 is large. It can be learned from FIG. 6 that when LSC processing is performed on images with different exposure times, the LSC gain information is different.

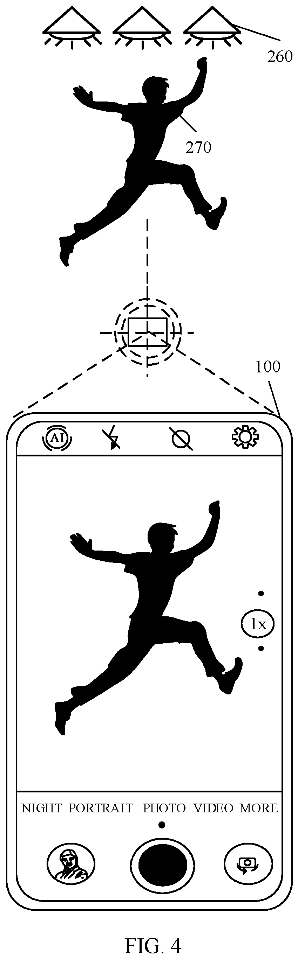

FIG. 4 is a schematic diagram of an application scenario of an image processing method according to an embodiment of this application.

For example, the image processing method provided in embodiments of this application may be applied to the field of photographing or video recording. For example, the image processing method provided in this application may be applied to capturing a moving object in a photographing environment (for example, an indoor photographing environment) of a flicker light source. The moving object may mean a moving user, a moving item, an image played in a video (for example, a movie), or the like.

For example, as shown in FIG. 4, a photographed object 270 is in motion in an indoor place with a flicker light source where an indoor lighting device (for example, an electric lamp 260) provides light. An electronic device 100 runs a camera application. When the electronic device 100 captures an image including the photographed object 270, a preview image including the photographed object 270 may be displayed on a display screen in real time. When viewing the preview image on the display screen of the electronic device 100, if the user captures an image of a moment of motion of the photographed object 270, the user may tap a photographing control on a photographing interface. When the photographing control of the electronic device 100 is triggered, the electronic device 100 may capture the image of the photographed object 270 at the moment of motion.

Optionally, in FIG. 4, an example in which the photographed object 270 is a user is used for description. The photographed object may alternatively be an animal, a vehicle, a robot, or the like. For example, the photographed object being in motion in the photographing environment with the flicker light source may mean that the user plays badminton or table tennis, practices yoga, or the like indoors. A photographed object in a photographing view angle of the electronic device may be one or more users.

For example, the photographed object moves in the photographing environment with the flicker light source may be that an animal (for example, a rabbit, a cat, or a dog) runs indoors.

In addition, a lighting device is needed to provide light in the indoor place. The lighting device may perform an operation on an alternating current. For example, the lighting device is a fluorescent lamp. A working principle of the fluorescent lamp is: A noble gas inside a lamp tube discharges at a high-voltage current, electrons generated by the discharge reach the lamp tube of the fluorescent lamp, and then the fluorescent lamp emits light. For example, the fluorescent lamp operates on a 50 Hz alternating current. When the fluorescent lamp operates on the alternating current, the fluorescent lamp flickers 100 times in one second on the 50 Hz alternating current.

Optionally, for example, the fluorescent lamp operates on a 60 Hz alternating current. When the fluorescent lamp operates on the alternating current, the fluorescent lamp flickers 120 times in one second on the 60 Hz alternating current.

For example, in this embodiment of this application, when the electronic device is in a photo mode, the display screen of the electronic device may display a preview image. When the photographing control of the electronic device is triggered, the electronic device may generate a snapped image (also referred to as a captured image). In a process in which the electronic device captures a moment of motion of the photographed object, a flicker of the light source in the photographing scenario affects the image captured by the image sensor, resulting banding in the image captured by the electronic device, as shown in part (a) of FIG. 5, and/or, a local color cast region, for example, 271 as shown in part (a) of FIG. 5. An image as shown in part (b) of FIG. 5 is obtained according to algorithms related to debanding processing and LSC processing. As shown in part (b) of FIG. 5, there is a local color cast region 272 in an image on which debanding is performed. The local color cast region 272 is different from the local color cast region 271. For example, the local color cast region 271 may be a red color cast region, and the local color cast region 272 may be a cyan color cast region. That is, a red color cast in the image obtained before debanding is performed may become the cyan color cast region after debanding processing and LSC processing are performed.

In view of this, embodiments of this application provide an image processing method and an electronic device. Because the light source of the photographing environment in which the electronic device is located is a flicker light source, when photographing a moving item, the electronic device needs to shorten an exposure time. This results in banding and a color cast image region in the image. In this embodiment of this application, color transfer and brightness transfer are performed on a short-exposure image based on a normal-exposure image, to remove the banding and the color cast image region in the short-exposure image. Further, when LSC processing is performed on the short-exposure image based on LSC gain information of the normal-exposure image, in order to ensure that when the image of the moving photographed object at a moment of motion is captured and the banding and the color cast image region are removed, no color overcorrection occurs in the image, to improve image quality.

The image processing method provided in embodiments of this application may be applied to any photo mode (for example, a photo mode) of the camera application. In the image processing method provided in this embodiment of this application, when the electronic device is located the photographing environment with the flicker light source, when the moving item is photographed, the banding in the image may be removed. For example, the pieces of light and dark banding and the local color cast region in the image are removed. Further, color overcorrection in the image on which debanding is performed can be avoided, to improve image quality.

Optionally, when the camera application is in a preview stage (for example, a photo preview), a preview image displayed by the electronic device includes the banding. After the photographing control of the electronic device is triggered, the image processing method provided in this embodiment of this application may be performed to obtain an image with the banding and the local cast removed.

Optionally, a photo mode of the camera application may include: a photo mode, a portrait mode, a large aperture mode, a professional mode, and the like.

Optionally, when the electronic device has sufficient computing power, the image processing method in this embodiment of this application may be further applied to the field of video recording, a video call, or other image processing.

For example, a video call scenario may include but is not limited to the following scenarios:
a video call, a video meeting application, a long/short video application, a video livestreaming application, an online video course application, an application scenario in which intelligent camera movement is performed for portrait photography, recording a video by using a video recording function of a system camera, video monitoring, intelligent cat eye, or another portrait photographing scenario.

It should be understood that the above is an example of describing the application scenarios, and does not limit the application scenarios of this application.

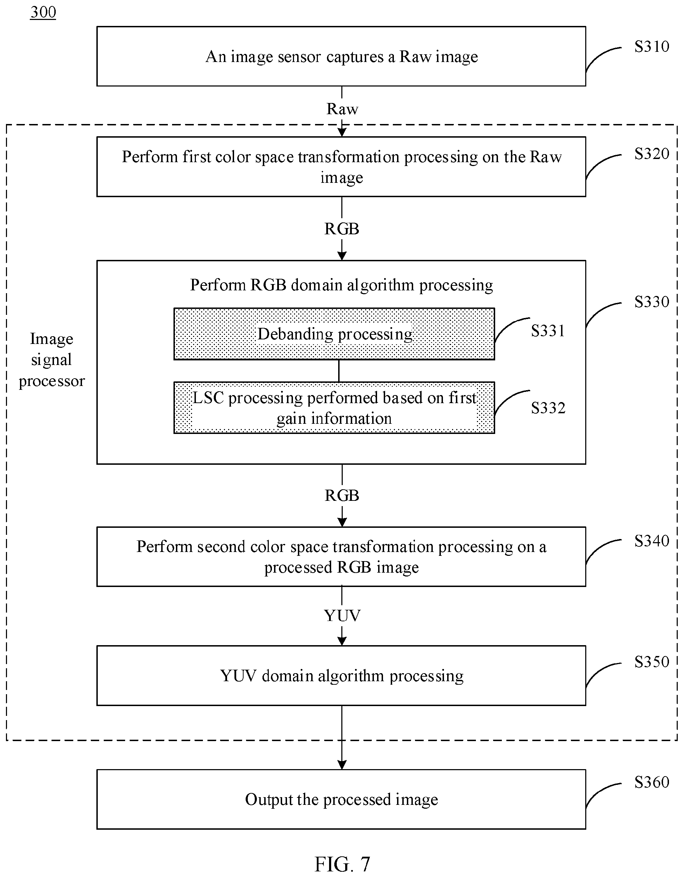

The following describes in detail the image processing method provided in embodiments of this application with reference to FIG. 7 to FIG. 12.

FIG. 7 is a schematic flowchart of a processing process of an image signal processor according to an embodiment of this application. The method 300 may be performed by the electronic device as shown in FIG. 1. The method 300 includes step S310 to step S360. The following separately describes step S310 to step S360 in detail.

S310: An image sensor captures a Raw image.

It should be understood that the Raw image means an image in Raw color space. The Raw image may mean original image data output from the image sensor without interpolation and color mixing.

Step S320: Perform first color space transformation processing on the Raw image.

For example, the Raw image may be transferred into RGB color space to obtain an RGB image.

Step S330: Perform RGB domain algorithm processing.

Optionally, S330 includes S331 and S332, where S331 is a process of performing debanding (debanding). S332 is LSC processing performed based on first gain information. The first gain information may mean gain information obtained based on statistical information of a normal-exposure image. For example, for a plurality of frames of exposure images, the first gain information may mean gain information obtained based on statistical information of a first frame of normal-exposure image in the plurality of frames of exposure images.

Optionally, S331 may be performed first, and then S332 is performed, as shown in FIG. 10.

Optionally, S332 may be performed first, and then S331 is performed, as shown in FIG. 11.

In this embodiment of this application, an image with pieces of light and dark banding and a local color cast region removed may be obtained in S331, and color overcorrection can be effectively avoided in S332, to enable accuracy of a color and brightness of the image to be high.

Optionally, RGB domain algorithm processing performed on the RGB image in S330 includes: color-related algorithm processing and other RGB domain algorithm processing. When color-related algorithm processing is performed, S331 and S332 are performed first, to obtain the image on which debanding is performed and that has no color overcorrection. Then, other color-related algorithmic processing is performed.

In this embodiment of this application, before color-related algorithm processing is performed, the image processing method provided in this embodiment of this application may be performed first. To be specific, debanding processing is performed, and LSC processing is performed based on the first gain information. The image with the pieces of light and dark banding and the local color cast region removed may be obtained by performing debanding processing, and color overcorrection can be effectively avoided by performing LSC processing based on the first gain information, to enable accuracy of the color and the brightness of the image to be high. Color-related algorithm processing is performed when accuracy of the color and the brightness is high, to ensure that another color-related algorithm processing is performed, based on the high accuracy of the color and the brightness of the image, on the image on which debanding is performed and that has no color overcorrection, thereby improving the image quality.

Optionally, in the image processing method provided in embodiments of this application, that is, debanding processing, an execution time for the RGB domain algorithm is not limited.

Optionally, for implementations of S331 and S332, refer to FIG. 10 or FIG. 11 below.

Step S340: Perform second color space transformation processing on a processed RGB image.

For example, the second color space may be YUV color space. The processed RGB image may be converted into the YUV color space, and then a YUV domain algorithm is performed.

Step S350: Perform YUV domain algorithm processing.

For example, the YUV domain algorithm processing includes but is not limited to:
brightness noise reduction processing, edge enhancement processing, contrast processing, and the like.

Step S360: Output a processed image.

Optionally, an image in a storage format is output. For example, the storage format includes: a JPEG format (JPG format), a GIF format, a PNG format, a PPM format, or a BMP format.

In this embodiment of this application, LSC processing is performed, based on the first gain information, by adding debanding processing to RGB domain algorithm processing. Because a light source of a photographing environment in which the electronic device is located is a flicker light source, when photographing a moving item, the electronic device needs to shorten an exposure time. This results in banding in an image. If the banding in the short-exposure image is removed, color overcorrection can be effectively avoided, to enable accuracy of a color and brightness of the image to be high, thereby improving image quality.

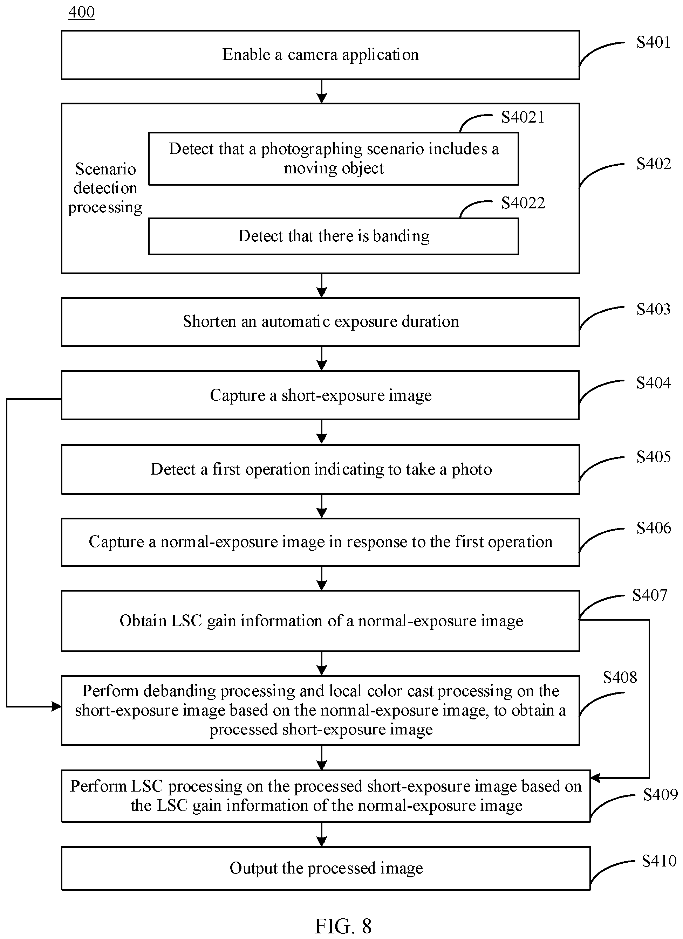

FIG. 8 is a schematic flowchart of an image processing method according to an embodiment of this application. The method 400 may be performed by the electronic device as shown in FIG. 1. The method 400 includes step S401 to step S410. The following separately describes step S401 to step S410 in detail.

S401: Enable a camera application.

For example, a user may indicate an electronic device to enable the camera application by tapping on an icon of the "camera" application. Alternatively, when an electronic device is in a screen-located state, a user may indicate the electronic device to enable the camera application through a rightward swipe gesture on a display screen of the electronic device. Alternatively, when an electronic device is in a screen-on state, and a screen-located interface includes an icon of the camera application, the user may indicate the electronic device to enable the camera application by tapping the icon of the camera application. Alternatively, when an electronic device is running another application, the application has a right to invoke the camera application; and by tapping a corresponding control, a user may indicate the electronic device to enable the camera application. For example, when the electronic device is running an instant messaging application, the user may indicate the electronic device to enable the camera application by selecting a camera function control.

It should be understood that the above is an example of an operation of enabling the camera application. The electronic device may alternatively be indicated through a voice instruction operation or another operation to enable a camera application. This is not limited in this application.

Optionally, after the camera application is enabled, an image sensor in the electronic device captures the Raw image.

It should be understood that the Raw image means an image in Raw color space. The Raw image may mean original image data output from the image sensor without interpolation and color mixing.

S402: Perform scenario detection processing.

Optionally, scenario detection processing includes S4021 and S4022. S4021: Detect that a photographing scenario includes a moving object. S4022: Detect that there is banding (banding).

It should be understood that the banding may be pieces of light and dark banding and/or a local color cast image region.

Optionally, the electronic device may calculate a motion amplitude based on information about optical flows of two successive frames of image in a preview stream. If the motion amplitude is greater than a threshold, it indicates that the photographing scenario includes the moving object.

It should be understood that an optical flow means an instantaneous pixel movement velocity of a spatially moving item on a viewing imaging plane. Generally, the optical flow is generated due to a movement of a foreground target in the scenario and/or a movement of a camera. The information about the optical flow may indicate a displacement deviation of pixels between the two frames of image.

For example, the moving object may be a moving user, a moving animal, a mobile item, an image played in a video, or the like.

Optionally, data may be collected by a flicker (Flicker) device, a frequency and an amplitude of a light source in the current photographing scenario may be calculated and output, and the banding may be detected.

For example, a flicker sensor (Flicker Sensor) in the electronic device may be configured to detect whether the banding exists. The flicker sensor (Flicker Sensor) may be a sensor that samples ambient light.

Optionally, to enable an exposure period to match a frame rate when S4022 is performed, a frame rate of the preview stream may be controlled, to enable the exposure period to be an integer multiple of an energy period of the light source.

For example, if the energy period of the light source is 10 ms, and the frame rate of the preview stream is 30, that is, each exposure period is 33.33 ms, the integer multiple of an energy period of the light source cannot match the exposure period. In this case, the frame rate of the preview stream may be adjusted to 25, that is, each exposure period is 40 ms, so that the integer multiple of the energy period of the light source matches the exposure period.

S403: Shorten an automatic exposure duration.

Optionally, if the electronic device detects that the photographing scenario includes the moving object, the electronic device is triggered to reduce the automatic exposure duration. In addition, a magnitude of the exposure duration is constrained by a scenario detection result. For example, if the image includes the moving object, the electronic device is triggered to shorten the exposure duration. If the image further includes banding, in order to prevent a color of the banding in the image from being excessively dark, an amplitude of shortening the exposure duration is small, that is, an amplitude of reducing the exposure duration is small.

S404: Capture a short-exposure image.

The short-exposure image includes the moving object.

Optionally, the short-exposure image may be an RGB image obtained after a plurality of frames of images are fused. For example, the short-exposure image may be a short-exposure image on which ISP processing is performed. The short-exposure image output after ISP processing is performed may be an RGB image obtained by using a short-exposure Raw image in a plurality of frames of Raw images as a reference frame.

It should be understood that because an exposure time of the short-exposure image is short, the exposure time of the short-exposure image usually does not satisfy an integer multiple of 10 ms. Therefore, there is banding in the short-exposure image. In addition, when a change in a voltage of the flicker light source is 10%, a color temperature of the light source changes significantly (for example, approximately 1000 K). Imaging of the image is related to the color temperature. When there is a small change in the voltage of the flicker light source, the color temperature changes significantly, resulting in a color cast in the image. Therefore, there may further be a color cast image region in the short-exposure image.

Optionally, a full size (full size) short-exposure Raw image may be obtained, namely, a short-exposure image obtained by performing ISP processing on a short-exposure Raw image (for example, a 512*512 RGB image).

For example, if a maximum resolution supported by a camera in a camera module is 4096*2160, a resolution of the obtained full size short-exposure Raw image may be 4096*2160.

S405: Detect a first operation indicating to take a photo.

Optionally, detecting the first operation indicating to take a photo may be an operation of detecting a tap operation on a shutter button.

It should be understood that the above is an example in which the first operation is a tap operation. The first operation may also be an operation of indicating to take a photo based on a voice indication operation or another operation of indicating to take a photo. This is not limited in this application.

S406: Capture a normal-exposure image in response to the first operation.

The normal-exposure image and the short-exposure image include a same moving object.

For example, in a photographing scenario with a flicker light source with an alternating current of 50 Hz, the normal-exposure image may be a Raw image with an exposure time of an integer multiple of 10 ms. To be specific, when the normal-exposure image is captured, an exposure time of the electronic device is an integer multiple of 10 ms.

Optionally, in this embodiment of this application, the electronic device may capture a plurality of frames of Raw images. The plurality of frames of Raw images include S_{A}N_{B}, where S_{A} represents A frames of short-exposure images, and N_{B} represents B frames of normal-exposure images, A is an integer greater than or equal to 1, and B is an integer greater than or equal to 1. An exposure time of the short-exposure image is less than 10 ms; and an exposure time of the normal-exposure image is an integer multiple of 10 ms. Optionally, A frames of short-exposure Raw images in the S_{A}N_{B} may be an image captured in S404.

Optionally, in this embodiment of this application, the electronic device may capture a plurality of frames of Raw images. The plurality of frames of Raw images include S_{A}N_{B}L_{C}, where S_{A} represents A frames of short-exposure images, N_{B} represents B frames of normal-exposure image, L_{C} represents C frames of long-exposure images, A is an integer greater than or equal to 1, B is an integer greater than or equal to 1, and C is an integer greater than or equal to 0. An exposure time of the short-exposure image is less than 10 ms; an exposure time of the normal-exposure image is an integer multiple of 10 ms; and an exposure time of the long-exposure image is greater than the exposure time of the normal-exposure image.

For example, the plurality of frames of Raw images may be 5 frames of images of S₂N₂L, that is, a Raw image of SSNNL, where 2 frames of S are short-exposure Raw images in the preview frame; 2 frames of N are normal-exposure images with exposure values greater than or equal to that of the 2 frames of short-exposure images and exposure times of an integer multiple of 10 ms; and 1 frame of L is a long-exposure image.

For example, color space transformation processing (for example, demosaicing processing) may be performed on one frame of normal-exposure Raw image or a first frame of normal-exposure Raw image in the plurality of frames of normal-exposure Raw images, to obtain an RGB image.

S407: Obtain LSC gain information of the normal-exposure image.

Optionally, the normal-exposure image may be input to an ISP for processing, and the LSC gain information of the normal-exposure image may be obtained based on statistical information of the normal-exposure image.

Optionally, if a camera module acquires a plurality of frames of exposure images. The plurality of frames of images may be input into an ISP for processing separately, and LSC gain information (for example, an LSC map) corresponding to the frame of image is obtained based on statistical information of each frame of exposure image.

For example, an LSC calibration parameter of a current frame of image, denoted as a fixed gain table, is obtained based on brightness information of the current frame of image (for example, the normal-exposure image or the plurality of frames of exposure images that are input to the ISP). The LSC calibration parameter is multiplied by the current frame of image, to obtain a processed image. A color shading gain of the processed image, denoted as a color shading gain, is counted based on statistical information of the processed image (for example, histogram information or gradient information of different image blocks). The LSC calibration parameter is multiplied by the color shading gain, to obtain the gain information of the current frame of image, denoted as a gain table. The gain information includes both a brightness shading correction and a color shading gain correction.

Optionally, the brightness information of the current frame of image includes: data of a brightness channel of the current frame of image, or a brightness value of a pixel point of the current frame of image.

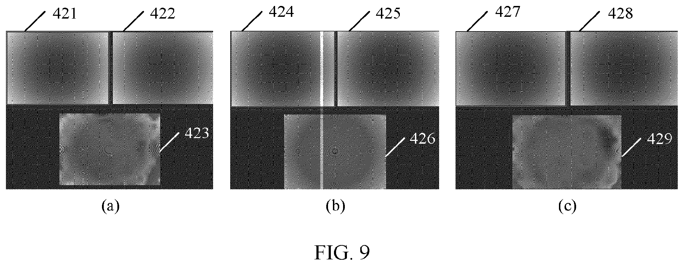

For example, FIG. 9 shows a comparison between LSC gain information (for example, an image with an exposure duration of 10 ms) obtained based on the statistical information and LSC gain information of a preview image 2 (for example, an image with an exposure duration of 10 ms). As shown in part (a) of FIG. 9, an image 421 represents LSC gain information of a red channel (an R channel) of the preview image 1obtained based on the statistical information. An image 422 represents LSC gain information of an R channel of the preview image 2. An image 423 represents difference information between the LSC gain information of the R channel obtained based on the statistical information and the LSC gain information of the R channel of the preview image 2. When a color in the image 423 is darker, a difference is larger. When a color is lighter, a difference is smaller. It can be learned from the image 423 that the difference between the LSC gain information of the red channel based on the statistical information and the LSC gain information of the R channel of the preview image 2 is small. As shown in part (b) of FIG. 9, an image 424 represents LSC gain information of a green channel (a G channel) of the preview image 1 obtained based on the statistical information. An image 425 represents LSC gain information of a G channel of the preview image 2. An image 426 represents difference information between the LSC gain information of the G channel based on the statistical information and the LSC gain information of the G channel of the preview image 2. When a color in the image 426 is darker, a difference is larger. When a color is lighter, a difference is smaller. It can be learned from the image 426 that the difference between the LSC gain information of the G channel based on the statistical information is small and the LSC gain information of the G channel of the preview image 2. As shown in part (c) of FIG. 9, an image 427 represents LSC gain information of a blue channel (a B channel) of the preview image 1 obtained based on the statistical information. An image 428 represents LSC gain information of a B channel of the preview image 2. An image 429 represents difference information between the LSC gain information of the B channel based on the statistical information and the LSC gain information of the B channel of the preview image 2. When a color in the image 429 is darker, a difference is larger. When a color is lighter, a difference is smaller. It can be learned from the image 429 that the difference between the LSC gain information of the B channel based on the statistical information is small and the LSC gain information of the B channel of the preview image 2. It can be learned from FIG. 9 that a difference between LSC gain information based on statistical information of an image with an exposure time of 10 ms and actual LSC gain information of a preview image with an exposure time of 10 ms is small.

S408: Perform debanding processing and local color cast processing on the short-exposure image based on the normal-exposure image, to obtain a processed short-exposure image.

It should be understood that because the exposure time of the normal-exposure image is an integer multiple of 10 ms, there is no banding in the normal-exposure image. That is, there is no Luma banding in the image. In addition, reasons for Chroma banding are as follows: When energy is changed, the color temperature changes, resulting in a color cast in the image. For example, if colors of pieces of light and dark banding in Luma banding are different, Chroma banding presents in the image. For example, a position of dark banding is reddish, and a position of light banding is bluish. For the normal-exposure image, energy received by each row of pixels is the same. Therefore, there is no energy fluctuation or color cast in the normal-exposure image. Therefore, there is no Luma banding and Chroma banding in the normal-exposure image. The pieces of light and dark banding and the local color cast in the short-exposure image may be removed by transferring color information and brightness information of the normal-exposure image to the short-exposure image. It may be understood that the processed short-exposure image includes image content information of the short-exposure image, and color information and brightness information of the normal-exposure image. This ensures that when the image of the moving photographed object at a moment of motion is captured, the banding and/or the color cast image region in the image are/is removed, to improve image quality.

The short-exposure image and the normal-exposure image are input into the image processing model for processing, to obtain a bilateral grid. Debanding processing and local color cast processing are performed on the short-exposure image based on the bilateral grid, to obtain a processed image. For example, the bilateral grid is multiplied by the short-exposure image to obtain the processed image.

It should be understood that the bilateral grid is a data structure. In this embodiment of this application, the bilateral grid may be a grid matrix. The grid matrix includes a color transformation matrix and a brightness parameter (for example, a gray level value of brightness). The color transformation matrix includes a red pixel gain (an R gain), a green pixel gain (a G gain), and a blue pixel gain (a B gain). The pieces of light and dark banding and the local color cast in the short-exposure image may be removed by transferring the color information and brightness information of the normal-exposure image to the short-exposure image based on data of the bilateral grid.

For example, the bilateral grid may be a 32 * 32 * 8 * 9 grid matrix, where 32 * 32 may represent a width and a height, 8 may represent a brightness order, that is, the gray level value of the brightness; and 9 may represent the color transformation matrix, that is, a 3 * 3 matrix acting on each RGB value.

It should be understood that a gray level means differentiation of a brightness change between a brightest and a darkest into different levels. Each level is used to represent a brightness change interval. It may be understood that, when the gray level value of the brightness is larger, a quantity of brightness change intervals is larger, and division of the brightness change intervals is finer.

Optionally, a network structure of the image processing model may be a convolutional neural network. For example, the image processing model may be an HDR Net. Training data includes a first sample image, a second sample image, and a third sample image. The first sample image is an image without banding. The second sample image is an image obtained by adding banding to the first image. The third sample image is an image without banding, and image quality of the third sample image is higher than image quality of the first sample image. The first sample image and the second sample image are input to a to-be-trained image processing model, to obtain a predicted bilateral grid. Interpolation processing is performed on the first sample image based on the predicted bilateral grid, to obtain a predicted image. The parameters of the image processing model are updated based on a difference between the predicted image and the third sample image, to obtain the trained image processing model.

For example, the third sample image may be an RGB image on which ISP processing is performed and that has no banding. The first sample image may be an RGB image obtained after color space conversion is performed based on a normal-exposure sample Raw image. Therefore, image quality of the third sample image is higher than image quality of the first sample image.

For example, a difference between pixels in the predicted image and the third sample image may be calculated, and the to-be-trained image processing model is trained through a back propagation algorithm, so that a loss function of the to-be-trained image processing model converges, and the trained image processing model is obtained.

Optionally, in this embodiment of this application, an image processing model for the Chroma banding may include 8 parameters. The 8 parameters are A * 3, a * 1, b * 1, c * 3. A represents an amplitude; a represents a frequency; b represents an initial phase; c represents an offset term; A * 3 represents an amplitude corresponding to RGB pixels separately; and c * 3 represents offset terms corresponding to the RGB pixels respectively.

Optionally, the color transfer processing may be performed on the short-exposure image based on the color transformation matrix in the bilateral grid, to remove the color cast image region in the short-exposure image. Brightness transfer processing may be performed on the short-exposure image based on the brightness parameter in the bilateral grid, to remove the pieces of light and dark banding in the short-exposure image.

Optionally, interpolation processing may be performed on the short-exposure image based on the data in the bilateral grid, to obtain the processed short-exposure image.

For example, the data in the bilateral grid is multiplied by a pixel matrix of the short-exposure image, to obtain a processed short-exposure image.

Optionally, in this embodiment of this application, the exposure time of the short-exposure image and the exposure time of the normal-exposure image are related to a number of times that the flicker light source flickers per second in the photographing environment in which the electronic device is located. For example, the exposure time of the normal-exposure time = an integer multiple of (1000/the number of times that the flicker light source flickers per second) of milliseconds.

For example, if a frequency of a working voltage of the flicker light source in the photographing environment is 50 Hz, that is, if the flicker light source flickers 100 times per second, the short-exposure image means an image with an exposure time less than 10 ms, and the normal-exposure image means an image with an exposure time of an integer multiple of 10 ms.

For example, if a frequency of a working voltage of the flicker light source in the photographing environment is 60 Hz, that is, if the flicker light source flickers 120 times per second, the short-exposure image means an image with an exposure time less than 8.3 ms, and the normal-exposure image means an image with an exposure time of an integer multiple of 8.3 ms.

S409: Perform LSC processing on the processed short-exposure image based on the LSC gain information of the normal-exposure image.

Optionally, LSC processing may be performed on the processed short-exposure image based on a red pixel gain, a green pixel gain, or a blue pixel gain in the gain information of the normal-exposure image, to obtain the short-exposure image on which LSC processing is performed.

Optionally, other RGB domain algorithms or YUV domain algorithms may also be performed after LSC processing is performed, to obtain the processed image.

Optionally, in this embodiment of this application, S408 may be performed first, and then S409 is performed, for example, refer to FIG. 10 below. Alternatively, S409 may be performed first on the short-exposure image and the normal-exposure image separately, and then S408 is performed, for example, refer to FIG. 11 below. This is not limited in this application.

S410: Output the processed image.

Optionally, an image in a storage format is output. For example, the storage format includes: a JPEG format (JPG format), a GIF format, a PNG format, a PPM format, or a BMP format.

### Example 1

Optionally, in this embodiment of this application, debanding processing may be performed first on the short-exposure image based on the normal-exposure image. LSC processing is performed, based on the LSC gain information of the normal-exposure image, on the processed short-exposure image on which debanding processing is performed, to obtain an image with pieces of light and dark banding and a color cast image region removed, and avoid color overcorrection in the image.

FIG. 10 is a schematic flowchart of an image processing method according to an embodiment of this application. The method 500 may be performed by the electronic device as shown in FIG. 1. The method 500 includes step S501 to step S509. The following separately describes step S501 to step S509 in detail.

S501: Capture a Raw image.

Optionally, an electronic device may capture a plurality of frames of Raw images.

The plurality of frames of Raw images include S_{A}N_{B}, where S_{A} represents A frames of short-exposure images in a preview stream, N_{B} represents B frames of normal-exposure images in a photo stream, A is an integer greater than or equal to 1, and B is an integer greater than or equal to 1. If a frequency of a working voltage of a flicker light source in a photographing environment is 50 Hz, an exposure time of a short-exposure image is less than 10 ms, and an exposure time of a normal-exposure image is an integer multiple of 10 ms. If a frequency of a working voltage of a flicker light source in a photographing environment is 60 Hz, a short-exposure image means an image with an exposure time less than 8.3 ms. A normal-exposure image means an image with an exposure time of an integer multiple of 8.3 ms.

The plurality of Raw images include S_{A}N_{B}L_{C}, where S_{A} represents A frames of short-exposure images in a preview stream, N_{B} represents B frames of normal-exposure images in a photo stream, L_{C} represents C frames of long-exposure images in the photo stream, A is an integer greater than or equal to 1, B is an integer greater than or equal to 1, and C is an integer greater than or equal to 0. If a frequency of a working voltage of a flicker light source in a photographing environment is 50 Hz, an exposure time of a short-exposure image is less than 10 ms, and an exposure time of a normal-exposure image is an integer multiple of 10 ms. If a frequency of a working voltage of a flicker light source in a photographing environment is 60 Hz, a short-exposure image means an image with an exposure time less than 8.3 ms. A normal-exposure image means an image with an exposure time of an integer multiple of 8.3 ms. An exposure time of a long-exposure image is greater than the exposure time of the normal-exposure image.

For example, the plurality of frames of Raw images may be 5 frames of images of S₂N₂L, that is, a Raw image of SSNNL, where 2 frames of S are short-exposure Raw images in a preview frame; 2 frames of N are, in a photographing frame, normal-exposure images with exposure values greater than or equal to that of the 4 frames of short-exposure images and exposure times of an integer multiple of 10 ms; and 1 frame of L is a long-exposure image.

Optionally, the preview stream is a data flow captured by the image sensor before the electronic device detects the tap operation performed on the shutter button. The photo stream is a data flow captured by the image sensor after the electronic device detects the tap operation performed on the shutter button.

S502: Acquire LSC gain information of the normal-exposure image based on statistical information.

Optionally, the LSC gain information includes gain information of a red pixel (for example, an R gain), gain information of a green pixel (for example, a G gain), and gain information of a blue pixel (for example, a B gain).

Optionally, for implementations of S502, refer to related descriptions of S407 in FIG. 8, and details are not described herein again.

S503: Perform automatic white balance processing.

For example, automatic white balance processing is used to enable a camera to restore white at any color temperature to white. Due to impact of the color temperature, a white paper is yellowish at a low color temperature, and is bluish at a high color temperature. The purpose of white balance processing is to enable a white object to be R = G = B at any color temperature, presenting in white.

Optionally, any existing automatic white balance processing method may be used in S503. This is not limited in this application.

S504: Perform demosaicing processing and noise reduction processing.

For example, demosaicing processing may mean converting a Raw domain image of a Bayer array structure into an RGB domain image; and noise reduction processing is performed to reduce noise in an image.

It should be understood that the Raw domain image means an image in Raw color space; and similarly, the RGB domain image means an image in RGB color space.

Optionally, any existing demosaicing processing and any existing noise reduction processing method may be used in S504. This is not limited in this application.

Optionally, S504 may further include multi-frame fusion. To be specific, fusion may be performed on a plurality of frames of Raw image based on a first frame of short-exposure image as a reference frame, to obtain one frame of fused short-exposure image.

For example, the first frame of short-exposure Raw image in the plurality of frames of Raw images may be used as a reference frame, and color information and brightness information in other Raw images in the plurality of frames of Raw images may be fused with the first frame of short-exposure Raw image, to obtain the fused short-exposure image.

S505: Perform debanding (debanding) processing.

Optionally, debanding processing may be performed on the short-exposure image based on the normal-exposure image. For implementations, refer to related descriptions of S408 in FIG. 8, and details are not described herein again.

S506: Perform color space transformation processing and downsampling processing.

Optionally, the image sensor acquires a plurality of frames of Raw images. The plurality of frames of Raw images include S_{A}N_{B} or S_{A}N_{B}L_{C}. Color space transformation processing and downsampling processing may be performed on the first frame of N image (for example, a first frame of normal-exposure image).

For example, color conversion processing includes demosaicing processing.

S507: Perform LSC processing.

For example, LSC processing means to correct lens shading. Lens shading means a phenomenon of uneven image brightness and/or image color caused by an optical feature of a lens. LSC processing may usually include both brightness shading (luma shading) correction and color shading (color shading) correction.

Optionally, when LSC processing is performed on the short-exposure image on which debanding processing is performed, LSC processing may be performed according to the LSC gain information of the normal-exposure image obtained based on the statistical information.

In this embodiment of this application, the pieces of light and dark banding and the local color cast in the short-exposure image may be removed by transferring color information and brightness information of the normal-exposure image to the short-exposure image, to obtain the processed short-exposure image. If LSC processing is performed on the processed short-exposure image based on LSC gain information of the short-exposure image, the LSC gain information does not match color information and brightness information of the processed short-exposure image, resulting in color overcorrection in the processed short-exposure image on which LSC processing is performed. In this embodiment of this application, LSC gain information of each frame of exposure image may be acquired based on the statistical information. Therefore, when LSC processing is performed on the processed short-exposure image, LSC processing may be performed on the processed short-exposure image based on the LSC gain information of the normal-exposure image, to enable the LSC gain information to match the processed short-exposure image. This avoids color overcorrection in the image on which LSC processing is performed, and improves image quality.

S508: Perform post-processing.

Optionally, post-processing may include:
some or all of color correction matrix (Color Correction Matrix, CCM) processing, global tone mapping (Global Tone Mapping, GTM) processing, local tone mapping (Local Tone Mapping, LTM) processing, or gamma (gamma) processing.

CCM processing is used to calibrate accuracy of another color other than white. GTM processing is used to resolve the problem of uneven distribution of gray values in a high-dynamic image. LTM processing is used to enhance local contrast of an image. Gamma processing is for adjusting brightness, contrast, a dynamic range, and the like of an image by adjusting a gamma curve.

S509: Output the processed image.

Optionally, an image in a storage format is output. For example, the storage format includes: a JPEG format (JPG format), a GIF format, a PNG format, a PPM format, or a BMP format.

In this embodiment of this application, because there are no pieces of light and dark banding and local color cast in the normal-exposure image, the pieces of light and dark banding and the local color cast in the short-exposure image may be removed by transferring color information and brightness information of the normal-exposure image to the short-exposure image, to obtain the processed short-exposure image. It may be understood that the processed short-exposure image includes image content information of the short-exposure image, and color information and brightness information of the normal-exposure image. In addition, if LSC processing is performed on the processed short-exposure image based on LSC gain information of the short-exposure image, the LSC gain information of the short-exposure image does not match color information and brightness information of the processed short-exposure image, resulting in color overcorrection in the processed short-exposure image on which LSC processing is performed. In this embodiment of this application, LSC gain information of each frame of exposure image (for example, the LSC gain information of the normal-exposure image) may be acquired based on the statistical information. Therefore, when LSC processing is performed on the processed short-exposure image, LSC processing may be performed on the processed short-exposure image based on the LSC gain information of the normal-exposure image, to enable the LSC gain information to match the processed short-exposure image. This avoids color overcorrection in the image on which LSC processing is performed. In conclusion, in this embodiment of this application, when an image of a moving photographed object at a moment of motion is captured, it can be ensured that banding and/or a color cast image region in an image are/is removed, and color overcorrection in the image is avoided, thereby improving image quality.

### Example 2

Optionally, in this embodiment of this application, LSC processing may be separately performed first on the normal-exposure image and the short-exposure image based on the LSC gain information of the normal-exposure image, and then debanding processing is performed on the short-exposure image on which LSC processing is performed, to obtain an image with pieces of light and dark banding and a color cast image region removed, and avoid color overcorrection in the image.

FIG. 11 is a schematic flowchart of an image processing method according to an embodiment of this application. The method 500 may be performed by the electronic device as shown in FIG. 1. The method 600 includes step S601 to step S610. The following separately describes step S601 to step S610 in detail.

S601: Capture a Raw image.

Optionally, for implementations of S601, refer to related descriptions of S501 in FIG. 10, and details are not described herein again.

S602: Acquire LSC gain information of a normal-exposure image based on statistical information.

Optionally, for implementations of S602, refer to related descriptions of S502 in FIG. 10, and details are not described herein again.

S603: Perform automatic white balance processing.

Optionally, for implementations of S603, refer to related descriptions of S503 in FIG. 10, and details are not described herein again.

S604: Perform demosaicing processing and noise reduction processing.

Optionally, for implementations of S604, refer to related descriptions of S504 in FIG. 10, and details are not described herein again.

S605: Perform first LSC processing.

Optionally, first LSC processing is performed on a short-exposure image based on the LSC gain information of the normal-exposure image, for example, a plurality of frames of Raw images are captured. The plurality of frames of Raw images include S_{A}N_{B} or S_{A}N_{B}L_{C}. LSC processing may be performed on a first frame of S image (for example, a first frame of short-exposure image).

For example, LSC processing means to correct lens shading. Lens shading means a phenomenon of uneven image brightness and/or an image color caused by an optical feature of a lens. LSC processing may usually include both brightness shading (luma shading) correction and color shading (color shading) correction.

Optionally, because color information and brightness information of the normal-exposure image are transferred to the short-exposure image in S608, in a possible implementation, the LSC gain information of the short-exposure image may be used in S605.

S606: Perform color space transformation processing and downsampling processing.

Optionally, for implementations of S606, refer to related descriptions of S506 in FIG. 10, and details are not described herein again.

S607: Perform second LSC processing.

Optionally, an image sensor acquires a plurality of frames of Raw images. The plurality of frames of Raw images include S_{A}N_{B} or S_{A}N_{B}L_{C}. Second LSC processing may be performed on a first frame of N image (for example, a first frame of normal-exposure image) based on the LSC gain information of the normal-exposure image.

S608: Perform debanding (debanding) processing.

Optionally, for implementations of S608, refer to related descriptions of S505 in FIG. 10, and details are not described herein again.

S609: Perform post-processing.

Optionally, for implementations of S609, refer to related descriptions of S508 in FIG. 10, and details are not described herein again.

S610: Output the processed image.

Optionally, for implementations of S610, refer to related descriptions of S509 in FIG. 10, and details are not described herein again.

In this embodiment of this application, if LSC processing is performed, based on LSC gain information of the short-exposure image, on a normal-exposure image on which color space transformation processing and downsampling processing are performed, because the LSC gain information of the short-exposure image does not match color information and brightness information of the normal-exposure image, color overcorrection may occur in the normal-exposure image on which LSC processing is performed. In this embodiment of this application, LSC gain information of each frame of exposure image (for example, the LSC gain information of the normal-exposure image) may be acquired based on the statistical information. Therefore, when LSC processing is performed on the normal-exposure image, LSC processing may be performed on the normal-exposure image based on the LSC gain information of the normal-exposure image, to enable the LSC gain information to match the normal-exposure image. This avoids color overcorrection in the image on which LSC processing is performed. In addition, because there are no pieces of light and dark banding and local color cast in the normal-exposure image, the pieces of light and dark banding and the local color cast in the short-exposure image may be removed by transferring color information and brightness information of the normal-exposure image to the short-exposure image, to obtain the processed short-exposure image. It may be understood that the processed short-exposure image includes image content information of the short-exposure image, and color information and brightness information of the normal-exposure image. In conclusion, in this embodiment of this application, when an image of a moving photographed object at a moment of motion is captured, it can be ensured that banding and/or a color cast image region in an image are/is removed, and color overcorrection in the image is avoided, thereby improving image quality. It should be noted that, compared to example 2 shown in FIG. 11, in the example 1 shown in FIG. 10, LSC processing needs to be performed once only. Therefore, compared to example 2, in the example 1, an amount of computing of the electronic device is small, to enable power consumption of the electronic device to be small.

FIG. 12 is a schematic flowchart of an image processing method according to an embodiment of this application. The method 700 may be performed by the electronic device as shown in FIG. 1. The method 700 includes step S710 to step S790. The following separately describes step S710 to step S790 in detail.

It should be understood that the method shown in FIG. 12 is applied to a photographing environment in which the electronic device is located and whose light source is a flicker light source. Because a light source in the solutions of this application is a flicker light source, when the electronic device captures an image, there may be banding in the image when an exposure time does not satisfy an integer multiple of (for example, 1000/a number of times that the light source flickers per second) milliseconds.

S710: Enable a camera application.

Optionally, refer to related descriptions of S401, and details are not described herein again.

S720: Display a first image, where the first image includes banding and/or a color cast image region.

The first image is an image of a photographed object collected based on a first exposure time, the photographed object is a moving object, and the first exposure time is less than a first duration.

Optionally, the first image may include banding. To be specific, the first image includes Luma banding.

Optionally, the first image may include the banding and the color cast image region. To be specific, the first image includes Luma banding and Chroma banding.

It should be understood that Luma banding means banding generated by shortening an exposure time. Luma banding has only light and dark transformation, without a color change. Reasons for generating Luma banding are as follows: A sinusoidal band of an alternating current generated by the flicker light source in the photographing environment may not offset the exposure integration period, resulting in banding with regular brightness in the captured image.

It should be understood that the Chroma banding means a color cast in a local region in an image. A color of the local region in the image does not match an overall color of the image, and there is red, green, blue, or another color cast. Reasons for Chroma banding are as follows: When energy is changed, the color temperature changes, resulting in a color cast in the image. For example, if colors of pieces of light and dark banding in Luma banding are different, Chroma banding presents in the image.

It should be further understood that the banding may mean global banding. That is, there are pieces of light and dark banding in an overall region in the image. The color cast image region may mean local banding, that is, there is a local color cast region in the image, and the color cast region does not match the overall color of the image, for example, may be a red color cast, a green color cast, or a blue color cast.

It should be further understood that because the exposure time of the first image is shorter than the first duration, the exposure integration period may not offset the banding. Therefore, there may be banding in the first image. In addition, when a change in a voltage of the flicker light source is 10%, a color temperature of the light source changes significantly (for example, approximately 1000 K). Imaging of the image is related to the color temperature. Because there is a small change in a voltage of a charged light source, the color temperature may change significantly, resulting in a color cast in the image.

Optionally, the first image may mean a preview image in a preview interface in the electronic device. The preview interface may mean a photographing preview interface or a video preview interface.

S730: Detect a first operation, where the first operation indicates the electronic device to take a photo or record a video.

For example, when the camera application is in a photo mode, the first operation may mean an operation of tapping a shutter button.

For example, when the camera application is in a video mode, the first operation may mean an operation of tapping a video recording control. It should be understood that the above is an example of the first operation. The first operation may also be a voice indication operation or another operation of indicating the electronic device to take a photo or record a video. This is not limited in this application.

Optionally, the moving object may mean a moving user, a moving item, an image played in a video (for example, a movie), or the like.

Optionally, the electronic device includes an image signal processor, and the first image may be an image output by the image signal processor.

In this embodiment of this application, the first image may be an image output by the image signal processor. Because the first image is the image output by a signal processor, the image signal processor may perform denoising processing on a short-exposure Raw image. Therefore, although the first image includes the banding, image details in the first image are rich.

S740: Capture a second image in response to the first operation.

The second image is an image of the photographed object collected based on a second exposure time, and the second exposure time is an integer multiple of the first duration. Optionally, the integer multiple includes 0 times.

It should be understood that because the exposure time of the second image is the integer multiple of the first duration, an exposure integration period may offset the banding. Therefore, there is no banding in the second image.

For example, for a flicker light source with an alternating current of 50 Hz, the exposure time of the second image may be an integer multiple of 10 ms.

It should be understood that because the exposure time of the second image satisfies the integer multiple of the first duration, each row of pixels in the second image receives the same energy, and there is no energy fluctuation or color cast problem in the second image. Therefore, there is no banding and color cast image region in the second image. That is, there is no Luma banding and Chroma banding in the second image.

Optionally, a magnitude of the first duration is obtained based on a number of times that the flicker light source flickers per second.

Optionally, the number of times that the flicker light source flickers per second is related to a frequency of a working voltage of the flicker light source.

For example, the first duration = 1000/the number of times that the flicker light source flickers per second.

For example, if the frequency of the working voltage of the flicker light source is 50 Hz, that is, if the number of times that the flicker light source flickers per second is 100, the first duration is 10 ms. In this case, an exposure time of the first image is less than 10 ms, and an exposure time of the second image is an integer multiple of 10 ms.

For example, if the frequency of the working voltage of the flicker light source is 60 Hz, that is, if the number of times that the flicker light source flickers per second is 120, the first duration is 8.3 ms. In this case, the exposure time of the first image is less than 8.3 ms, and the exposure time of the second image is an integer multiple of 8.3 ms.

It should be understood that, a magnitude of the first duration is described above by using an example, and a magnitude of the first duration is not limited in this application.

Optionally, the second image is an image obtained by performing third image processing on a Raw image captured by the electronic device, and the third image processing includes color space transformation processing.

For example, the electronic device may collect a normal-exposure Raw image, and perform the color space transformation processing on the normal-exposure Raw image to obtain the second image.

For example, the second image may be an image in RGB color space, or an image in YUV color space.

It should be understood that, in this embodiment of this application, the second image is a normal-exposure image. For example, the second image may be an image obtained by performing downsampling processing and color space transformation processing on the normal-exposure Raw image. In this embodiment of this application, because color information and brightness information in the second image need to be used to perform transfer processing on the first image, a requirement for detailed information in the second image is low. That is, the second image does not need to be processed by the image signal processor.

Optionally, before the obtaining a second image, the method further includes:
detecting a photographing scenario in which the electronic device is located, and detecting the moving object; and
detecting that there are/is banding and/or the color cast image region in the first image.

For example, the electronic device may include a detection module, and the detection module may detect the photographed object. When the photographed object includes the moving object, the detection module outputs an identifier, and the identifier may indicate that the photographing scenario includes the moving object.

For example, a flicker sensor (Flicker Sensor) in the electronic device may be configured to detect whether there is banding. The flicker sensor (Flicker Sensor) may be a sensor that samples ambient light.

In this embodiment of this application, when there is the moving object in the photographing scenario and the collected image includes banding, the electronic device may be triggered to perform the image processing method provided in embodiments of this application, that is, a method for removing the banding in the image.

It should be understood that if the photographing scenario includes the moving object, the electronic device captures an image of the moving object at the moment of motion. Because the photographed object moves, an electronic device usually needs to reduce motion blur in the image. In order to reduce motion blur in the image, the electronic device may usually shorten an exposure time to increase a photosensitivity value. However, for the photographing environment with a flicker light source, if the exposure time is reduced, there may be banding in the image. Therefore, the banding in the image needs to be processed.

S750: Obtain a color transformation matrix and/or a brightness parameter based on the first image and the second image.

The color transformation matrix is used to adjust a color of the first image, and the brightness parameter is used to represent a gray level of brightness.

For example, brightness parameter may include a gray level value of the brightness. In this embodiment of this application, because the second image is an image with a normal-exposure time, there is no banding in the second image. The color transformation matrix and the brightness parameter may be obtained by transferring a color and brightness of the second image into the first image.

It should be understood that the color transformation matrix may represent a difference between a color of a pixel point in the first image and a color of a pixel point in the second image. For example, the color transformation matrix may include a red pixel gain (an R gain), a green pixel gain (a G gain), and a blue pixel gain (a B gain).

Optionally, a grid matrix may be obtained based on the pixel point in the first image and the pixel point in the second image. Data in the grid matrix may be used to represent a difference between a color of the first image and a color of the second image and a difference between brightness of the first image and brightness of the second image. For example, the grid matrix may be a 32 * 32 * 8 * 9 grid matrix, where 32 * 32 may represent a width and a height of the grid matrix, 8 may represent the gray level value of the brightness; and 9 may represent the color transformation matrix, that is, a 3*3 matrix acting on each RGB value. The grid matrix may be a bilateral grid, and the bilateral grid is a data structure.

The method further includes:
inputting the first image and the second image to an image processing model, to obtain bilateral grid data, where the image processing model is configured to perform color transfer processing and brightness transfer processing on the first image by using the second image as a reference, the bilateral grid data includes the color transformation matrix and/or the brightness parameter, and a size of the first image is the same as a size of the second image.

For example, the image processing model is a convolutional neuron network. For example, the image processing model may be HDRnet.

In this embodiment of this application, the color transformation matrix and/or the brightness parameter are/is obtained based on the bilateral grid output by the image processing model. When the image processing model performs the color transfer and brightness transfer on the first image, a deviation region between the first image and a second image having a large difference in image content can be identified. That is, the image processing model can identify a ghost region between the second image and the first image. Therefore, when the color and/or the brightness of the first image are/is adjusted based on the color transformation matrix and/or the brightness parameter obtained by the image processing model, no ghost region is introduced, and image quality is improved.

Optionally, registration processing and smoothing processing may be first performed on the first image and the second image. A difference is performed between a first image on which registration processing is performed and a second image on which registration processing is performed, to obtain the color transformation matrix and/or the brightness parameter.

S760: Perform first image processing on the first image based on the color transformation matrix and/or the brightness parameter, to obtain a third image.

The third image is an image with the banding and/or the color cast image region removed.

For example, the color adjustment may be performed on the first image based on the color transformation matrix, to remove the color cast image region in the first image; and the brightness adjustment may be performed on the first image based on the brightness parameter, to remove the banding in the first image.

Optionally, the performing first image processing on the first image based on the color transformation matrix and/or the brightness parameter, to obtain a third image includes:
performing interpolation processing on the first image based on the color transformation matrix and/or the brightness parameter, to obtain the third image.

For example, the color transformation matrix and/or the brightness parameter may be multiplied by a matrix of the first image to obtain the third image.

Optionally, the performing interpolation processing on the first image based on the color transformation matrix and/or the brightness parameter, to obtain the third image includes:
performing, in first color space, first image processing on the first image based on the color transformation matrix and/or the brightness parameter, to obtain a processed image; and
performing, in the first color space, second image processing on the processed image, to obtain the third image, where the second image processing is a color processing algorithm in the first color space.

For example, the first color space may be RGB color space. That is, first image processing may be processed in the RGB color space.

For example, in the RGB color space, first image processing may be performed first; and then another algorithm related to color processing in the RGB color space is performed.

Optionally, the image processing model is trained by the following methods:
obtaining sample data, where the sample data includes a first sample image, a second sample image, and a third sample image, the second sample image includes image content and banding and/or a color cast image region in the first sample image, the third sample image has the same image content as the first sample image, and image quality of the third sample image is higher than image quality of the first sample image;
inputting the first sample image and the second sample image to a to-be-trained image processing model, to obtain predicted bilateral grid data;
performing interpolation processing on the second sample image based on the predicted bilateral grid data, to obtain a predicted image; and
training the to-be-trained image processing model based on a difference between the predicted image and the third sample image, to obtain the image processing model.

S770: Acquire a first parameter based on brightness information of the second image. The first parameter is configured to perform lens shading correction processing.

Optionally, the brightness information of the second image includes: data of a brightness channel of the second image, or a brightness value of a pixel point of the second image.

Optionally, the lens shading correction processing includes color shading correction and brightness shading correction, and the acquiring the first parameter based on brightness information of the second image includes:
obtaining a calibration parameter for lens shading correction based on the brightness information of the second image;
multiplying the calibration parameter for lens shading correction by a pixel point in the second image, to obtain a processed second image;
obtaining a second parameter based on statistical information of the processed second image, where the statistical information of the second image includes a brightness histogram of the processed second image or a brightness gradient map of the processed second image, and the second parameter is configured to perform color shading correction; and
multiplying the calibration parameter for lens shading correction by the second parameter, to obtain the first parameter, where the first parameter is configured to perform color shading correction and brightness shading correction.

For example, refer to related descriptions of S407 in FIG. 8, and details are not described herein again.

S780: Perform lens shading correction processing on the third image based on the first parameter, to obtain a fourth image.

Optionally, the fourth image may be obtained by multiplying the first parameter by the third image.

S790: Display or store the fourth image.

For example, when the electronic device is running another application, the application has a permission to invoke the camera application. The fourth image may be displayed when the another application invokes the camera application to obtain an image. For example, when the electronic device runs the photo mode (or the video mode) of the camera application, after the electronic device detects an operation indicating to take a photo (or an operation indicating to record video), the fourth image may be stored.

In this embodiment of this application, because the light source of the photographing environment in which the electronic device is located is the flicker light source, when photographing a moving item, the electronic device needs to shorten an exposure time. This results in banding in an image. In this embodiment of this application, the third image with the banding and/or the color cast image region in the first image removed is obtained by transferring color information and the brightness information of the second image (for example, a normal-exposure image) to the first image (for example, a short-exposure image). If LSC processing is performed on the third image based on LSC gain information of the short-exposure image, because the LSC gain information does not match color information and brightness information of the third image, color overcorrection may occur in a fourth image on which LSC processing is performed. In this embodiment of this application, LSC gain information of each frame of exposure image may be acquired based on the statistical information. Therefore, when LSC processing is performed on the third image, LSC processing may be performed on the third image based on the LSC gain information of the second image, to enable the LSC gain information to match the third image. This avoids color overcorrection in the fourth image on which LSC processing is performed. In conclusion, in this embodiment of this application, when an image of a moving photographed object at a moment of motion is captured, it can be ensured that banding and/or a color cast image region in an image are/is removed, and color overcorrection in the image is avoided, thereby improving image quality.

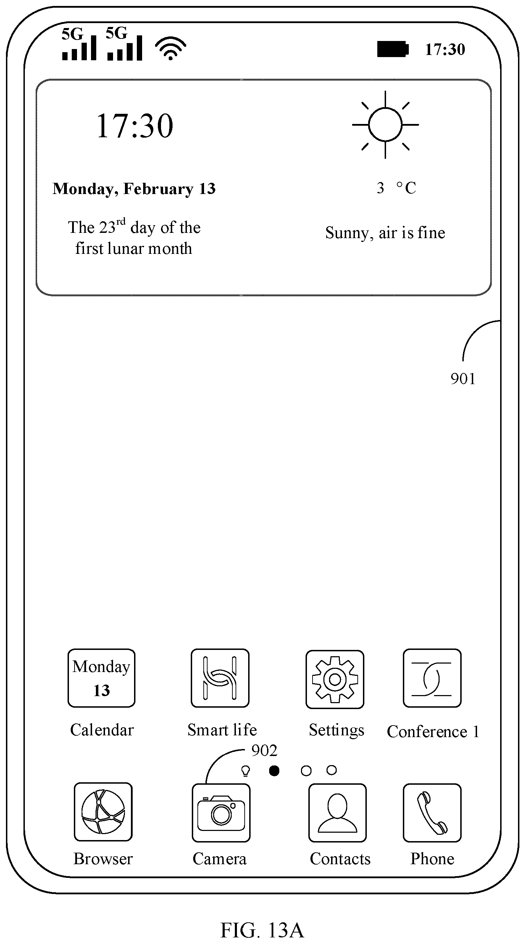

The following describes an example of a schematic diagram of an interface in an electronic device with reference to FIG. 13A to FIG. 17D.

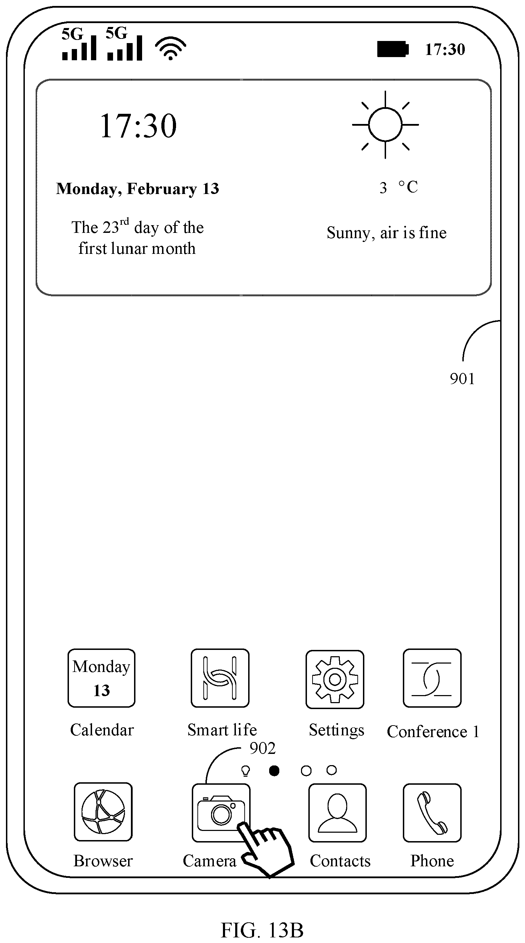

FIG. 13A and FIG. 13B are a schematic diagram of an interface of an electronic device according to an embodiment of this application.

In this embodiment of this application, after an electronic device runs a camera application, a preview image displayed in a preview interface in the electronic device includes banding and a color cast image region. After detecting a tap operation performed on a smart control, the electronic device may perform an image processing method provided in embodiments of this application, that is, may perform an image processing method includes debanding processing and LSC processing that is based on gain information of a normal-exposure image.

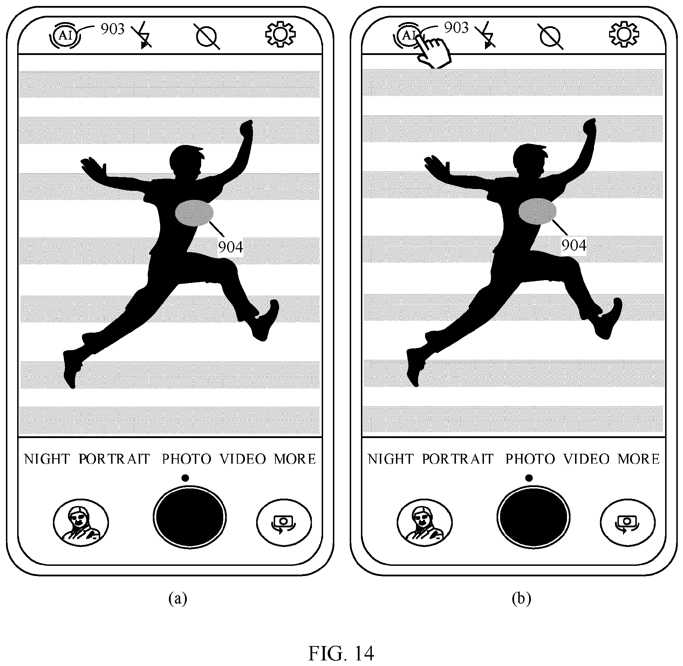

In an example, as shown in part (b) of FIG. 14, after detecting a tap operation performed on a control 703, the electronic device performs the image processing method provided by embodiments of this application.

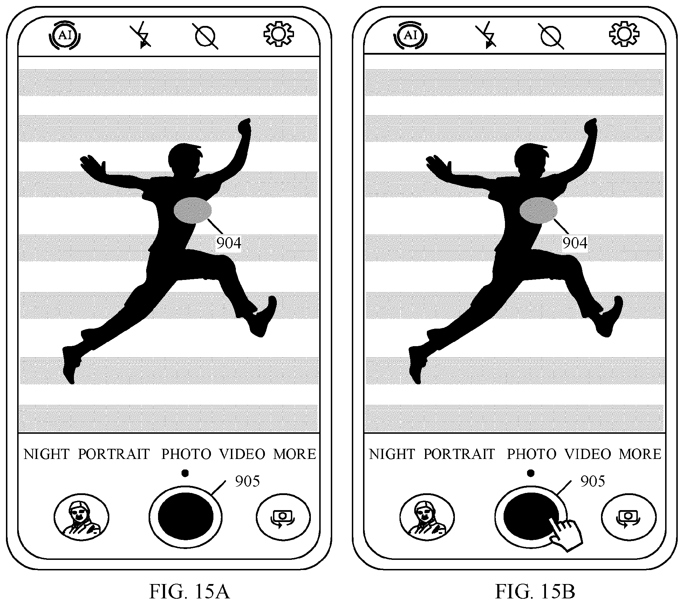

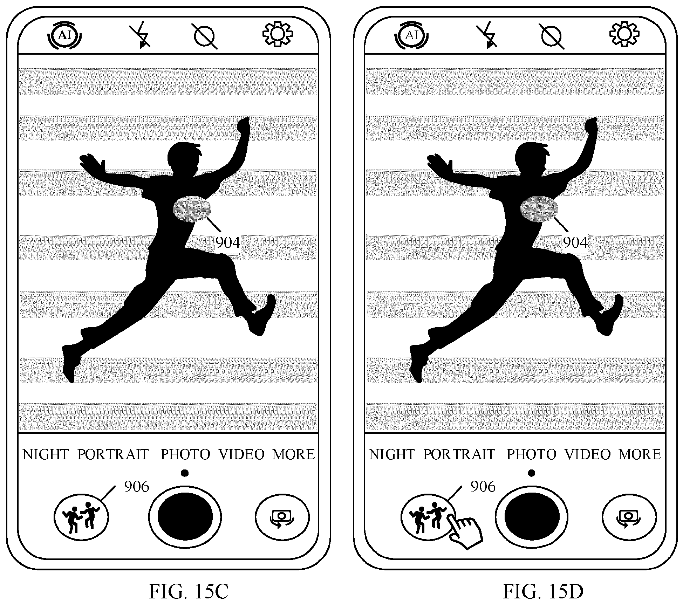

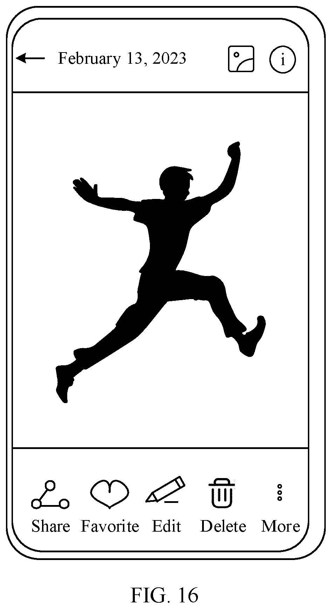

For example, as shown in FIG. 13A and FIG. 13B, a graphical user interface (graphical user interface, GUI) shown in FIG. 13A is a home screen 901 of the electronic device. The electronic device detects a tap operation performed on a control 902 of the camera application on the home screen 901, as shown in FIG. 13B. After the electronic device detects the tap operation performed on the control 902 of the camera application on the home screen 901, the electronic device enables the camera application. For example, as shown in part (a) of FIG. 14, the electronic device may display a photographing preview interface. The photographing preview interface includes a preview image and a smart control 903. The preview image includes pieces of light and dark banding and a color cast image region 904. The color cast image region 904 may be red, green, blue, or another color. The electronic device detects a tap operation performed on the smart control 903, as shown in part (b) of FIG. 14. After the electronic device detects the tap operation performed on the smart control 903, if the electronic device detects the tap operation on a photographing control, the electronic device may perform the image processing method provided by embodiments of this application. For example, after the electronic device detects an operation performed on the smart control 903, the electronic device displays a preview interface, as shown in FIG. 15A. The preview interface includes a photographing control 905. The electronic device detects a tap operation performed on the photographing control 905, as shown in FIG. 15B. After detecting the tap operation performed on the photographing control 905, the electronic device displays a preview interface. The preview interface includes a thumbnail 906, as shown in FIG. 15C. The electronic device detects a tap operation performed on the thumbnail 906, as shown in FIG. 15D. After detecting the tap operation performed on the thumbnail 906, the electronic device displays an image display interface, as shown in FIG. 16.

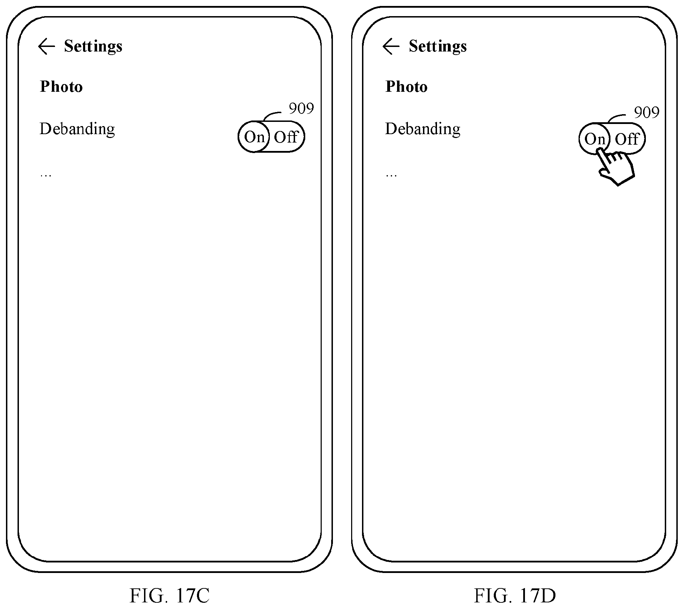

In an example, as shown in FIG. 17D, after the electronic device detects a tap operation performed on a control 909, if the electronic device detects the tap operation on the photographing control, the electronic device may perform the image processing method provided by embodiments of this application.

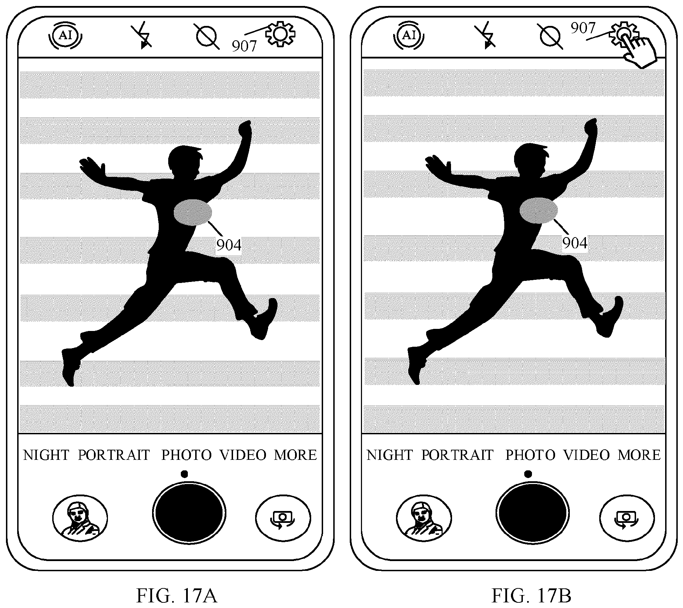

For example, after enabling the camera application, the electronic device may display a preview interface as shown in FIG. 17A. The preview interface includes a preview image and a setting control 907. The preview image includes pieces of light and dark banding and a color cast image region 904. The color cast image region 904 may be red, green, blue, or another color. The electronic device detects a tap operation on the setting control 907, as shown in FIG. 17B. After detecting the tap operation performed on the setting control 907, the electronic device displays a setting interface is displayed, as shown in FIG. 17C. The setting interface includes a debanding control 909. The electronic device detects a tap operation performed on the debanding control 909, as shown in FIG. 17D. After the electronic device detects the tap operation performed on the debanding control 909, if the electronic device detects the tap operation performed on the photographing control, the electronic device performs the image processing method provided in embodiments of this application.

It should be understood that the above is an example of a display interface in an electronic device. This is not limited in this application.

It should be understood that the foregoing example is merely intended to help a person skilled in the art to understand embodiments of this application, and is not intended to limit embodiments of this application to specific values or specific scenarios in the example. Obviously, a person skilled in the art may make various equivalent modifications or variations according to the given example. The modifications or variations also fall within the scope of embodiments of this application.

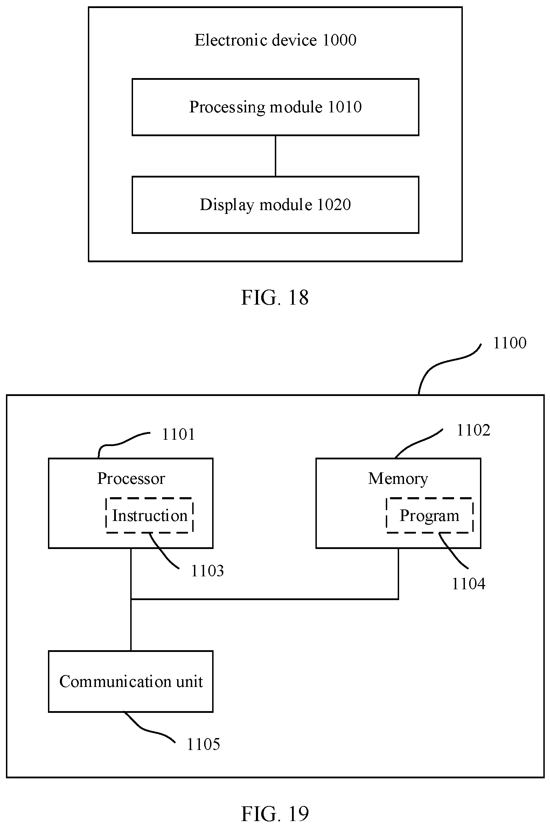

The foregoing describes the image processing method in embodiments of this application in detail with reference to FIG. 1 to FIG. 17A to FIG. 17D, and the following describes an apparatus embodiment of this application in detail with reference to FIG. 18 to FIG. 19. It should be understood that an apparatus in this embodiment of this application may perform various methods in the foregoing embodiments of this application. In other words, for specific work processes of the following various products, refer to corresponding processes in the foregoing method embodiments.

FIG. 18 is a schematic diagram of a structure of an electronic device according to an embodiment of this application. The electronic device 1000 includes a processing module 1010 and a display module 1020.

It should be understood that a light source of a photographing environment in which the electronic device 1000 is located is a flicker light source.

In an implementation, the processing module 1010 is configured to: enable a camera application. The displaying module 1020 is configured to: display a first image, where the first image is an image of a photographed object captured based on a first exposure time, the photographed object is a moving object, the first exposure time is shorter than a first duration, and the first image includes banding and/or a color cast image region. The processing module 1010 is further configured to: detect a first operation, where the first operation indicates the electronic device to take a photo or record a video; capture a second image in response to the first operation, where the second image is an image of the photographed object captured based on a second exposure time, and the second exposure time is an integer multiple of the first duration; obtain a color transformation matrix and/or a brightness parameter based on the first image and the second image, where the color transformation matrix is configured to adjust a color of the first image, and the brightness parameter is configured to represent a gray level of brightness; perform first image processing on the first image based on the color transformation matrix and/or the brightness parameter, to obtain a third image, where the third image is an image with the banding and/or the color cast image region removed; acquire a first parameter based on brightness information of the second image, where the first parameter is configured to perform lens shading correction processing; and perform lens shading correction processing on the third image based on the first parameter, to obtain a fourth image. The displaying module 1020 is further configured to: display or store the fourth image.

Optionally, in an embodiment, the processing module 1010 is further configured to:
input the first image and the second image into an image processing model, to obtain bilateral grid data, where the bilateral grid data includes the color transformation matrix and/or the brightness parameter, and a size of the first image is the same as a size of the second image.

Optionally, in an embodiment, the processing module 1010 is specifically configured to:
perform interpolation processing on the first image based on the color transformation matrix and/or the brightness parameter, to obtain the third image.

Optionally, in an embodiment, the processing module 1010 is specifically configured to:
perform, in first color space, first image processing on the first image based on the color transformation matrix and/or the brightness parameter, to obtain a processed image; and
perform, in the first color space, second image processing on the processed image, to obtain the third image, where second image processing is a color processing algorithm in the first color space.

Optionally, in an embodiment, the lens shading correction processing includes color shading correction and brightness shading correction. The processing module 1010 is specifically configured to: obtain a calibration parameter for lens shading correction based on the brightness information of the second image;
multiply the calibration parameter for lens shading correction by a pixel point in the second image, to obtain a processed second image;
obtain a second parameter based on statistical information of the processed second image, where the statistical information of the second image includes a brightness histogram of the processed second image or a brightness gradient map of the processed second image, and the second parameter is configured to perform color shading correction; and
multiply the calibration parameter for lens shading correction by the second parameter, to obtain the first parameter, where the first parameter is configured to perform color shading correction and brightness shading correction.

Optionally, in an embodiment, before acquiring the second image, the processing module 1010 is specifically configured to:
detect the photographing scenario in which the electronic device is located, and detect the moving object; and
detect that there are/is the banding and/or the color cast image region in the first image.

Optionally, in an embodiment, a magnitude of the first duration is obtained based on a number of times that the flicker light source flickers per second.

Optionally, in an embodiment, the first duration = 1000/the number of times that the flicker light source flickers per second.

Optionally, in an embodiment, the image processing model is a convolutional neuron network.

Optionally, in an embodiment, the image processing model is trained by the following methods:
acquiring sample data, where the sample data includes a first sample image, a second sample image, and a third sample image, the second sample image includes image content and banding and/or a color cast image region in the first sample image, the third sample image has same image content as the first sample image, and image quality of the third sample image is higher than image quality of the first sample image;
inputting the first sample image and the second sample image to a to-be-trained image processing model, to obtain predicted bilateral grid data;
performing interpolation processing on the second sample image based on the predicted bilateral grid data, to obtain a predicted image; and
training the to-be-trained image processing model based on a difference between the predicted image and the third sample image, to obtain the image processing model.

In another implementation, the processing module 1010 is configured to: enable a camera application. The displaying module 1020 is configured to: display a first image, where the first image is an image of a photographed object captured based on a first exposure time, the photographed object is a moving object, the first exposure time is shorter than a first duration, and the first image includes banding and/or a color cast image region. The processing module 1010 is further configured to: detect a first operation, where the first operation indicates the electronic device to take a photo or record a video; capture a second image in response to the first operation, where the second image is an image of the photographed object captured based on a second exposure time, and the second exposure time is an integer multiple of the first duration; acquire a first parameter based on brightness information of the second image, where the first parameter is configured to perform lens shading correction processing; and perform lens shading correction processing on the second image based on the first parameter, to obtain a fifth image; obtain a color transformation matrix and/or a brightness parameter based on the first image and the fifth image, where the color transformation matrix is configured to adjust a color of the first image, and the brightness parameter is configured to represent a gray level of brightness; and perform first image processing on the first image based on the color transformation matrix and/or the brightness parameter, to obtain a fourth image, where the fourth image is an image with the banding and/or the color cast image region removed. The displaying module 1020 is further configured to: display or store the fourth image.

Optionally, in an embodiment, the first image is an image on which lens shading correction processing is performed based on the first parameter.

Optionally, in an embodiment, the processing module 1010 is further configured to:
input the first image and the fifth image into an image processing model, to obtain bilateral grid data, where the bilateral grid data includes the color transformation matrix and/or the brightness parameter, and a size of the first image is the same as a size of the fifth image.

Optionally, in an embodiment, the processing module 1010 is specifically configured to:
perform interpolation processing on the first image based on the color transformation matrix and/or the brightness parameter, to obtain the fourth image.

Optionally, in an embodiment, the processing module 1010 is further configured to:
perform, in first color space, first image processing on the first image based on the color transformation matrix and/or the brightness parameter, to obtain a processed image; and
perform, in the first color space, second image processing on the processed image, to obtain the fourth image, where second image processing is a color processing algorithm in the first color space.

Optionally, in an embodiment, the lens shading correction processing includes color shading correction and brightness shading correction. The processing module 1010 is specifically configured to:
obtain a calibration parameter for lens shading correction based on the brightness information of the second image;
multiply the calibration parameter for lens shading correction by a pixel point in the second image, to obtain a processed second image;
obtain a second parameter based on statistical information of the processed second image, where the statistical information of the second image includes a brightness histogram of the processed second image or a brightness gradient map of the processed second image, and the second parameter is configured to perform color shading correction; and
multiply the calibration parameter for lens shading correction by the second parameter, to obtain the first parameter, where the first parameter is configured to perform color shading correction and brightness shading correction.

Optionally, in an embodiment, before acquiring the second image, the processing module 1010 is further configured to:
detect the photographing scenario in which the electronic device is located, and detect the moving object; and
detect that there are/is the banding and/or the color cast image region in the first image.

Optionally, in an embodiment, a magnitude of the first duration is obtained based on a number of times that the flicker light source flickers per second.

Optionally, in an embodiment, the first duration = 1000/the number of times that the flicker light source flickers per second.

In a possible implementation, the number of times that the flicker light source flickers per second is related to a frequency of a working voltage of the flicker light source.

Optionally, in an embodiment, the image processing model is a convolutional neuron network.

Optionally, in an embodiment, the image processing model is trained by the following methods:
acquiring sample data, where the sample data includes a first sample image, a second sample image, and a third sample image, the second sample image includes image content and banding and/or a color cast image region in the first sample image, the third sample image has same image content as the first sample image, and image quality of the third sample image is higher than image quality of the first sample image;
inputting the first sample image and the second sample image to a to-be-trained image processing model, to obtain predicted bilateral grid data;
performing interpolation processing on the second sample image based on the predicted bilateral grid data, to obtain a predicted image; and
training the to-be-trained image processing model based on a difference between the predicted image and the third sample image, to obtain the image processing model.

It should be noted that the electronic device 1000 is implemented in a form of a functional module. The term "module" may be implemented through the form of software and/or hardware, which is not specifically limited.

For example, the "module" may be a software program, a hardware circuit, or a combination of the two, to implement the foregoing functions. The hardware circuit may include an application specific integrated circuit (application-specific integrated circuit, ASIC), an electronic circuit, a processor (for example, a shared processor, a dedicated processor, or a packet processor) configured to execute one or more software or firmware programs and a memory, a combined logic circuit, and/or another appropriate component that supports the described functions.

Therefore, the units in the examples described in the embodiments of this application can be implemented by electronic hardware, or a combination of computer software and electronic hardware. Whether a function is performed by hardware or by software depends on particular applications and design constraints of the technical solutions. A person skilled in the art may use different methods to implement the described functions for each specific application, but it should not be considered that the implementation goes beyond the scope of this application.

FIG. 19 is a schematic diagram of a structure of an electronic device according to this application. A dotted line in FIG. 19 indicates that a unit or module is optional. The electronic device 1100 may be used to implement the image processing method described in the foregoing method embodiment.

For example, the electronic device 1100 includes one or more processors 1101, and the one or more processors 1101 can support the electronic device 1100 to implement the image processing methods in the method embodiments. The processor 1101 may be a general purpose processor or a special purpose processor. For example, the processor 1101 may be a central processing unit (central processing unit, CPU), a digital signal processor (digital signal processor, DSP), an application specific integrated circuit (application specific integrated circuit, ASIC), a field programmable gate array (field programmable gate array, FPGA), or other programmable logic devices such as discrete gates, transistor logic devices, or discrete hardware components.

Optionally, the processor 1101 may be configured to control the electronic device 1100, execute a software program, and process data of the software program. The electronic device 1100 may further include a communication unit 1105, to implement signal input (reception) and output (transmission).

For example, the electronic device 1100 may be a chip; the communication unit 1105 may be an input and/or output circuit of the chip, or the communication unit 1105 may be a communication interface of the chip; and the chip may be a component of a terminal device or other electronic devices.

For another example, the electronic device 1100 may be a terminal device, and the communication unit 1105 may be a transceiver of the terminal device, or the communication unit 1105 in the electronic device 1100 may include one or more memories 1102 that store a program 1104. The program 1104 may be run by the processor 1101 to generate an instruction 1103, so that the processor 1101 performs, based on the instruction 1103, the image processing method described in the foregoing method embodiments.

Optionally, data may be also stored in the memory 1102.

Optionally, the processor 1101 may also read data stored in the memory 1102, the data may be stored in a same storage address as the program 1104, or the data may be stored at a different storage address from the program 1104.

Optionally, the processor 1101 and the memory 1102 may be disposed separately or integrated together, for example, being integrated on a system on chip (system on chip, SOC) of a terminal device.

For example, the memory 1102 may be configured to store a program 1104 related to the image processing method provided in embodiments of this application. The processor 1101 may be configured to invoke, when performing the image processing method, the program 1104 related to the image processing method stored in the memory 1102 to perform the image processing method provided in embodiments of this application, for example, enabling a camera application; displaying a first image, where the first image is an image of a photographed object captured based on a first exposure time, the photographed object is a moving object, the first exposure time is shorter than a first duration, and the first image includes banding and/or a color cast image region; detecting a first operation, where the first operation indicates the electronic device to take a photo or record a video; capturing a second image in response to the first operation, where the second image is an image of the photographed object captured based on a second exposure time, and the second exposure time is an integer multiple of the first duration; obtaining a color transformation matrix and/or a brightness parameter based on the first image and the second image, where the color transformation matrix is configured to adjust a color of the first image, and the brightness parameter is configured to represent a gray level of brightness; performing first image processing on the first image based on the color transformation matrix and/or the brightness parameter, to obtain a third image, where the third image is an image with the banding and/or the color cast image region removed; acquiring a first parameter based on brightness information of the second image, where the first parameter is configured to perform lens shading correction processing; performing lens shading correction processing on the third image based on the first parameter, to obtain a fourth image; and displaying or storing the fourth image. Optionally, refer to FIG. 10 or FIG. 12.

For example, the memory 1102 may be configured to store a program 1104 related to the image processing method provided in embodiments of this application. The processor 1101 may be configured to invoke, when performing the image processing method, the program 1104 related to the image processing method stored in the memory 1102 to perform the image processing method provided in embodiments of this application, for example, enabling a camera application; displaying a first image, where the first image is an image of a photographed object captured based on a first exposure time, the photographed object is a moving object, the first exposure time is shorter than a first duration, and the first image includes banding and/or a color cast image region; detecting a first operation, where the first operation indicates the electronic device to take a photo or record a video; capturing a second image in response to the first operation, where the second image is an image of the photographed object captured based on a second exposure time, and the second exposure time is an integer multiple of the first duration; acquiring a first parameter based on brightness information of the second image, where the first parameter is configured to perform lens shading correction processing; performing lens shading correction processing on the second image based on the first parameter, to obtain a fifth image; and obtaining a color transformation matrix and/or a brightness parameter based on the first image and the fifth image, where the color transformation matrix is configured to adjust a color of the first image, and the brightness parameter is configured to represent a gray level of brightness; performing first image processing on the first image based on the color transformation matrix and/or the brightness parameter, to obtain a fourth image, where the fourth image is an image with the banding and/or the color cast image region removed; and displaying or storing the fourth image. Optionally, refer to FIG. 11.

Optionally, this application further provides a computer program product. When the computer program product is executed by the processor 1101, the image processing method according to any one of the method embodiments in this application is implemented.

For example, the computer program product may be stored in the memory 1102, and may be, for example, the program 1104. The program 1104 undergoes processing processes such as preprocessing, compiling, assembling, and linking, to be finally converted into an executable target file that can be executed by the processor 1101.

Optionally, this application further provides a computer-readable storage medium, having a computer program stored thereon. When the computer program is executed by a computer, the image processing method according to any method embodiment of this application is implemented. The computer program may be an advanced language program, or may be an executable target program.

For example, the computer-readable storage medium is, for example, the memory 1102. The memory 1102 may be a volatile memory or a non-volatile memory, or the memory 1102 may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external cache. Through illustrative but not limited description, many forms of RAMs may be used, for example, a static random access memory (static RAM, SRAM), a dynamic RAM (dynamic RAM, DRAM), a synchronous DRAM (synchronous DRAM, SDRAM), a double data rate SDRAM (double data rate SDRAM, DDR SDRAM), an enhanced synchronous dynamic random access memory (enhanced SDRAM, ESDRAM), a synchronous link DRAM (synchlink DRAM, SLDRAM), and a direct rambus RAM (direct rambus RAM, DR RAM).

A person of ordinary skill in the art may notice that the exemplary units and algorithm steps described with reference to embodiments disclosed in this specification can be implemented in electronic hardware, or a combination of computer software and electronic hardware. Whether a function is performed by hardware or by software depends on particular applications and design constraints of the technical solutions. A person skilled in the art may use different methods to implement the described functions for each specific application, but it should not be considered that the implementation goes beyond the scope of this application.

A person skilled in the art can clearly understand that for convenience and conciseness of description, the specific working processes of the above-described systems, apparatuses, and units can be understood with reference to the corresponding processes in the above-described method embodiments and will not be repeated here.

In the several embodiments provided in this application, it should be understood that the disclosed system, apparatus and method may be implemented in other manners. For example, the described embodiment of the electronic device is merely an example. For example, the module division is merely logical function division and may be another division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatus or units may be implemented in electronic, mechanical, or other forms.

The units described as separate parts may or may not be physically separate, and parts displayed as units may or may not be physical units, may be located in one position, or may be distributed on a plurality of network units. Some or all the units may be selected according to actual requirements to achieve the objectives of the solutions of embodiments.

In addition, functional units in embodiments of this application may be integrated into one processing unit, each of the units may exist alone physically, or two or more units are integrated into one unit.

It should be understood that sequence numbers of the processes in embodiments of this application do not mean execution sequences. The execution sequences of the processes should be determined based on functions and internal logic of the processes, and should not be construed as any limitation on the implementation processes of embodiments of this application.

In addition, the term "and/or" in this specification is merely an association relationship for describing associated objects, and indicates that three relationships may exist. For example, "A and/or B" may indicate the following three cases: Only A exists, both A and B exist, and only B exists. In addition, the character "/" in this specification usually indicates an "or" relationship between the associated objects.

When the functions are implemented in a form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of this application. The foregoing storage medium includes various media that can store program code, such as a USB flash drive, a removable hard disk, a read-only memory (read-only memory, ROM), a random access memory (random access memory, RAM), a magnetic disk, or an optical disc.

## Claims

1. An image processing method, applied to an electronic device (100), wherein a light source (260) of a photographing environment in which the electronic device (100) is located is a flicker light source, and the image processing method comprises:
enabling (S710) a camera application;
displaying (S720) a first image, wherein the first image is an image of a photographed object captured based on a first exposure time, the photographed object is a moving object, the first exposure time is shorter than a first duration, and the first image comprises banding and/or a color cast image region;
detecting (S730) a first operation, wherein the first operation indicates the electronic device (100) to take a photo or record a video;
capturing (S740) a second image in response to the first operation, wherein the second image is an image of the photographed object captured based on a second exposure time, and the second exposure time is an integer multiple of the first duration;
obtaining (S750) a color transformation matrix and/or a brightness parameter based on the first image and the second image, wherein the color transformation matrix is configured to adjust a color of the first image, and the brightness parameter is configured to represent a gray level of brightness;
performing (S760) first image processing on the first image based on the color transformation matrix and/or the brightness parameter, to obtain a third image, wherein the third image is an image with the banding and/or the color cast image region removed; and
acquiring (S770) a first parameter based on brightness information of the second image, wherein the first parameter is configured to perform lens shading correction processing;
performing (S780) lens shading correction processing on the third image based on the first parameter, to obtain a fourth image; and
displaying or storing (S790) the fourth image; wherein the image processing method further comprises:
inputting the first image and the second image into an image processing model, to obtain bilateral grid data, wherein the bilateral grid data comprises the color transformation matrix and/or the brightness parameter, and a size of the first image is the same as a size of the second image.

2. The image processing method according to claim 1, wherein the performing first image processing on the first image based on the color transformation matrix and/or the brightness parameter, to obtain the third image comprises:
performing interpolation processing on the first image based on the color transformation matrix and/or the brightness parameter, to obtain the third image.

3. The image processing method according to claim 2, wherein the performing interpolation processing on the first image based on the color transformation matrix and/or the brightness parameter, to obtain the third image comprises:
performing, in first color space, first image processing on the first image based on the color transformation matrix and/or the brightness parameter, to obtain a processed image; and
performing, in the first color space, second image processing on the processed image, to obtain the third image, wherein second image processing is a color processing algorithm in the first color space.

4. The image processing method according to any one of claims 1 to 3, wherein the lens shading correction processing comprises color shading correction and brightness shading correction, and the acquiring (S770) the first parameter based on brightness information of the second image comprises:
obtaining a calibration parameter for lens shading correction based on the brightness information of the second image;
multiplying the calibration parameter for lens shading correction by a pixel point in the second image, to obtain a processed second image;
obtaining a second parameter based on statistical information of the processed second image, wherein the statistical information of the second image comprises a brightness histogram of the processed second image or a brightness gradient map of the processed second image, and the second parameter is configured to perform color shading correction; and
multiplying the calibration parameter for lens shading correction by the second parameter, to obtain the first parameter, wherein the first parameter is configured to perform color shading correction and brightness shading correction.

5. The image processing method according to any one of claims 1 to 4, wherein before the capturing (S740) the second image, the method further comprises:
detecting the photographing scenario in which the electronic device (100) is located, and detecting the moving object; and
detecting that there are/is the banding and/or the color cast image region in the first image.

6. The image processing method according to any one of claims 1 to 5, wherein a magnitude of the first duration is obtained based on a number of times that the flicker light source flickers per second.

7. The image processing method according to claim 6, wherein the first duration = 1000/the number of times that the flicker light source flickers per second.

8. The image processing method according to claim 1, wherein the image processing model is a convolutional neural network.

9. The image processing method according to claim 1 or 8, wherein the image processing model is trained by the following method:
acquiring sample data, wherein the sample data comprises a first sample image, a second sample image, and a third sample image, the second sample image comprises image content and banding and/or a color cast image region in the first sample image, the third sample image has same image content as the first sample image, and image quality of the third sample image is higher than image quality of the first sample image;
inputting the first sample image and the second sample image to a to-be-trained image processing model, to obtain predicted bilateral grid data;
performing interpolation processing on the second sample image based on the predicted bilateral grid data, to obtain a predicted image; and
training the to-be-trained image processing model based on a difference between the predicted image and the third sample image, to obtain the image processing model.

10. The image processing method according to any one of claims 1 to 9, wherein the brightness information of the second image comprises: data of a brightness channel of the second image or a brightness value of a pixel point in the second image.

11. An image processing method, applied to an electronic device (100), wherein a light source (260) of a photographing environment in which the electronic device (100) is located is a flicker light source, and the image processing method comprises:
enabling (S401) a camera application;
displaying a first image, wherein the first image is an image of a photographed object captured based on a first exposure time, the photographed object is a moving object, the first exposure time is shorter than a first duration, and the first image comprises banding and/or a color cast image region;
detecting (S405) a first operation, wherein the first operation indicates the electronic device (100) to take a photo or record a video;
capturing (S406) a second image in response to the first operation, wherein the second image is an image of the photographed object captured based on a second exposure time, and the second exposure time is an integer multiple of the first duration;
acquiring (S407) a first parameter based on brightness information of the second image, wherein the first parameter is configured to perform lens shading correction processing;
performing (S409) lens shading correction processing on the second image based on the first parameter, to obtain a fifth image; and
obtaining a color transformation matrix and/or a brightness parameter based on the first image and the fifth image, wherein the color transformation matrix is configured to adjust a color of the first image, and the brightness parameter is configured to represent a gray level of brightness;
performing first image processing on the first image based on the color transformation matrix and/or the brightness parameter, to obtain a fourth image, wherein the fourth image is an image with the banding and/or the color cast image region removed; and
displaying or storing (S410) the fourth image; wherein the image processing method further comprises:
inputting the first image and the fifth image into an image processing model, to obtain bilateral grid data, wherein the bilateral grid data comprises the color transformation matrix and/or the brightness parameter, and a size of the first image is the same as a size of the fifth image.

12. The image processing method according to claim 11, wherein the first image is an image on which lens shading correction processing is performed based on the first parameter.

13. The image processing method according to claims 11 to 12 wherein the performing first image processing on the first image based on the color transformation matrix and/or the brightness parameter, to obtain the fourth image comprises:
performing interpolation processing on the first image based on the color transformation matrix and/or the brightness parameter, to obtain the fourth image.

## Patentansprüche

1. Ein Bildverarbeitungsverfahren, angewendet auf ein elektronisches Gerät (100), wobei eine Lichtquelle (260) der Aufnahmesituation, in der sich das elektronische Gerät (100) befindet, eine flackernde Lichtquelle ist, und das Bildverarbeitungsverfahren Folgendes umfasst:
Aktivieren (S710) einer Kameraanwendung;
Darstellen (S720) eines ersten Bildes, wobei das erste Bild ein Bild eines aufgenommenen Objekts zeigt, das auf Grundlage einer ersten Belichtungszeit aufgenommen wurde, das aufgenommene Objekt ein sich bewegendes Objekt ist, die erste Belichtungszeit kürzer als eine erste Dauer ist und das erste Bild Banding und/oder einen Farbstich-Bildbereich umfasst;
Erkennen (S730) einer ersten Bedienung, wobei die erste Bedienung das elektronische Gerät (100) anweist, ein Foto aufzunehmen oder ein Video aufzuzeichnen;
Aufnehmen (S740) eines zweiten Bildes als Antwort auf die erste Bedienung, wobei das zweite Bild ein Bild des aufgenommenen Objekts ist, das auf Grundlage einer zweiten Belichtungszeit aufgenommen wurde, und die zweite Belichtungszeit ein ganzzahliges Vielfaches der ersten Dauer ist;
Ermitteln (S750) einer Farbtransformationmatrix und/oder eines Helligkeitsparameters auf Grundlage des ersten und des zweiten Bildes, wobei die Farbtransformationmatrix zur Anpassung einer Farbe des ersten Bildes dient und der Helligkeitsparameter dazu dient, ein Graustufen-Niveau der Helligkeit darzustellen;
Durchführen (S760) einer ersten Bildverarbeitung am ersten Bild auf Grundlage der Farbtransformationmatrix und/oder des Helligkeitsparameters, um ein drittes Bild zu erhalten, wobei das dritte Bild ein Bild ist, bei dem das Banding und/oder der Farbstich-Bildbereich entfernt wurden; und
Ermitteln (S770) eines ersten Parameters basierend auf den Helligkeitsinformationen des zweiten Bildes, wobei der erste Parameter zur Durchführung einer Objektiv-Vignettierungskorrektur verwendet wird;
Durchführen (S780) der Objektiv-Vignettierungskorrektur beim dritten Bild basierend auf dem ersten Parameter, um ein viertes Bild zu erhalten; und
Anzeigen oder Speichern (S790) des vierten Bildes; wobei das Bildverarbeitungsverfahren außerdem umfasst:
Eingeben des ersten Bildes und des zweiten Bildes in ein Bildverarbeitungsmodell, um bilaterale Grid-Daten zu erhalten, wobei die bilateralen Grid-Daten die Farbtransformationmatrix und/oder den Helligkeitsparameter umfassen, und die Größe des ersten Bildes der des zweiten Bildes entspricht.

2. Das Bildverarbeitungsverfahren nach Anspruch 1, wobei das Durchführen der ersten Bildverarbeitung am ersten Bild auf Grundlage der Farbtransformationmatrix und/oder des Helligkeitsparameters, um das dritte Bild zu erhalten, Folgendes umfasst:
Durchführen einer Interpolationsverarbeitung am ersten Bild basierend auf der Farbtransformationmatrix und/oder dem Helligkeitsparameter, um das dritte Bild zu erhalten.

3. Das Bildverarbeitungsverfahren nach Anspruch 2, wobei das Interpolationsverfahren auf das erste Bild auf Basis der Farbtransformationsmatrix und/oder des Helligkeitsparameters durchgeführt wird, um das dritte Bild zu erhalten, umfasst:
Durchführen einer ersten Bildverarbeitung im ersten Farbraum auf das erste Bild basierend auf der Farbtransformationsmatrix und/oder dem Helligkeitsparameter, um ein verarbeitetes Bild zu erhalten; und
Durchführen einer zweiten Bildverarbeitung im ersten Farbraum auf das verarbeitete Bild, um das dritte Bild zu erhalten, wobei die zweite Bildverarbeitung ein Farbverarbeitungsalgorithmus im ersten Farbraum ist.

4. Das Bildverarbeitungsverfahren nach einem der Ansprüche 1 bis 3, wobei die Objektiv-Vignettierungskorrektur eine Farbschattierungskorrektur und eine Helligkeitsschattierungskorrektur umfasst, und das Ermitteln (S770) des ersten Parameters auf Basis von Helligkeitsinformationen des zweiten Bildes Folgendes umfasst:
Ermitteln eines Kalibrierungsparameters für die Objektiv-Vignettierungskorrektur basierend auf den Helligkeitsinformationen des zweiten Bildes;
Multiplizieren des Kalibrierungsparameters für die Objektiv-Vignettierungskorrektur mit einem Pixelpunkt im zweiten Bild, um ein verarbeitetes zweites Bild zu erhalten;
Ermitteln eines zweiten Parameters basierend auf den statistischen Informationen des verarbeiteten zweiten Bildes, wobei die statistischen Informationen des zweiten Bildes ein Helligkeitshistogramm des verarbeiteten zweiten Bildes oder eine Helligkeitsgradientenkarte des verarbeiteten zweiten Bildes umfassen und der zweite Parameter zur Durchführung der Farbschattierungskorrektur verwendet wird; und
Multiplizieren des Kalibrierungsparameters für die Objektiv-Vignettierungskorrektur mit dem zweiten Parameter, um den ersten Parameter zu erhalten, wobei der erste Parameter zur Durchführung der Farbschattierungskorrektur und der Helligkeitsschattierungskorrektur verwendet wird.

5. Das Bildverarbeitungsverfahren nach einem der Ansprüche 1 bis 4, wobei vor der Aufnahme (S740) des zweiten Bildes das Verfahren weiterhin Folgendes umfasst:
Erkennen des Aufnahmeszenarios, in dem sich das elektronische Gerät (100) befindet, und Erkennen des sich bewegenden Objekts; und
Erkennen, dass es im ersten Bild eine Streifenbildung und/oder einen Farbstich-Bildbereich gibt.

6. Das Bildverarbeitungsverfahren nach einem der Ansprüche 1 bis 5, wobei die Größe der ersten Dauer basierend auf der Anzahl der Flimmern des Flimmerlichtquelle pro Sekunde ermittelt wird.

7. Das Bildverarbeitungsverfahren nach Anspruch 6, wobei die erste Dauer = 1000 / der Anzahl, wie oft die Flimmerlichtquelle pro Sekunde flimmert.

8. Das Bildverarbeitungsverfahren nach Anspruch 1, wobei das Bildverarbeitungsmodell ein Convolutional Neural Network ist.

9. Das Bildverarbeitungsverfahren nach Anspruch 1 oder 8, wobei das Bildverarbeitungsmodell durch das folgende Verfahren trainiert wird:
Erfassen von Beispieldaten, wobei die Beispieldaten ein erstes Beispielbild, ein zweites Beispielbild und ein drittes Beispielbild umfassen, das zweite Beispielbild Bildinhalte sowie Streifenbildung und/oder einen Farbstich-Bildbereich im ersten Beispielbild beinhaltet, das dritte Beispielbild den gleichen Bildinhalt wie das erste Beispielbild aufweist und die Bildqualität des dritten Beispielbildes höher ist als die Bildqualität des ersten Beispielbildes;
Eingabe des ersten Beispielbildes und des zweiten Beispielbildes in ein zu trainierendes Bildverarbeitungsmodell, um vorhergesagte bilaterale Gitterdaten zu erhalten;
Durchführen einer Interpolationsverarbeitung auf das zweite Beispielbild basierend auf den vorhergesagten bilateralen Gitterdaten, um ein vorhergesagtes Bild zu erhalten; und
Trainieren des zu trainierenden Bildverarbeitungsmodells basierend auf dem Unterschied zwischen dem vorhergesagten Bild und dem dritten Beispielbild, um das Bildverarbeitungsmodell zu erhalten.

10. Das Bildverarbeitungsverfahren nach einem der Ansprüche 1 bis 9, wobei die Helligkeitsinformation des zweiten Bildes Folgendes umfasst: Daten eines Helligkeitskanals des zweiten Bildes oder einen Helligkeitswert eines Pixelpunkts im zweiten Bild.

11. Ein Bildverarbeitungsverfahren, angewendet auf ein elektronisches Gerät (100), wobei eine Lichtquelle (260) der Aufnahmeumgebung, in der sich das elektronische Gerät (100) befindet, eine Flackerlichtquelle ist, und das Bildverarbeitungsverfahren Folgendes umfasst:
Aktivieren (S401) einer Kameraanwendung;
Anzeigen eines ersten Bildes, wobei das erste Bild ein Bild eines aufgenommenen Objekts ist, das basierend auf einer ersten Belichtungszeit aufgenommen wurde, das aufgenommene Objekt ein sich bewegendes Objekt ist, die erste Belichtungszeit kürzer als eine erste Dauer ist und das erste Bild eine Streifenbildung und/oder einen Farbstich-Bildbereich umfasst;
Erkennen (S405) einer ersten Aktion, wobei die erste Aktion das elektronische Gerät (100) anweist, ein Foto aufzunehmen oder ein Video aufzuzeichnen;
Aufnehmen (S406) eines zweiten Bildes als Antwort auf die erste Aktion, wobei das zweite Bild ein Bild des aufgenommenen Objekts ist, das basierend auf einer zweiten Belichtungszeit aufgenommen wurde, und die zweite Belichtungszeit ein ganzzahliges Vielfaches der ersten Dauer ist;
Erfassen (S407) eines ersten Parameters basierend auf Helligkeitsinformationen des zweiten Bildes, wobei der erste Parameter zur Durchführung einer Objektiv-Vignettierungskorrektur dient;
Durchführen (S409) einer Objektiv-Vignettierungskorrektur am zweiten Bild basierend auf dem ersten Parameter, um ein fünftes Bild zu erhalten; und
Erhalten einer Farbtransformationsmatrix und/oder eines Helligkeitsparameters basierend auf dem ersten und dem fünften Bild, wobei die Farbtransformationsmatrix dafür vorgesehen ist, eine Farbe des ersten Bildes anzupassen, und der Helligkeitsparameter dazu dient, ein Graustufenhelligkeitsniveau darzustellen;
Durchführen einer ersten Bildverarbeitung an dem ersten Bild basierend auf der Farbtransformationsmatrix und/oder dem Helligkeitsparameter, um ein viertes Bild zu erhalten, wobei das vierte Bild ein Bild ist, bei dem das Banding und/oder der Farbstich-Bildbereich entfernt wurde; und
Anzeigen oder Speichern (S410) des vierten Bildes; wobei das Bildverarbeitungsverfahren weiterhin umfasst:
Eingabe des ersten und des fünften Bildes in ein Bildverarbeitungsmodell, um bilaterale Rasterdaten zu erhalten, wobei die bilateralen Rasterdaten die Farbtransformationsmatrix und/oder den Helligkeitsparameter umfassen und die Größe des ersten Bildes mit der des fünften Bildes identisch ist.

12. Das Bildverarbeitungsverfahren gemäß Anspruch 11, wobei das erste Bild ein Bild ist, für das eine Linsenschattenkorrektur basierend auf dem ersten Parameter durchgeführt wurde.

13. Das Bildverarbeitungsverfahren gemäß den Ansprüchen 11 bis 12, wobei das Durchführen einer ersten Bildverarbeitung am ersten Bild basierend auf der Farbtransformationsmatrix und/oder dem Helligkeitsparameter zur Gewinnung des vierten Bildes umfasst:
Durchführen einer Interpolationsverarbeitung am ersten Bild basierend auf der Farbtransformationsmatrix und/oder dem Helligkeitsparameter, um das vierte Bild zu erhalten.

## Revendications

1. Procédé de traitement d'image, appliqué à un dispositif électronique (100), où une source lumineuse (260) de l'environnement de prise de vue dans lequel se trouve le dispositif électronique (100) est une source lumineuse à scintillement, ledit procédé de traitement d'image comprenant :
activation (S710) d'une application appareil photo ;
affichage (S720) d'une première image, la première image étant une image d'un objet photographié capturée sur la base d'un premier temps d'exposition, l'objet photographié étant un objet en mouvement, le premier temps d'exposition étant inférieur à une première durée, et la première image comprenant des bandes et/ou une région d'image présentant une dominante de couleur ;
détection (S730) d'une première opération, où la première opération indique au dispositif électronique (100) de prendre une photo ou d'enregistrer une vidéo ;
capture (S740) d'une seconde image en réponse à la première opération, la seconde image étant une image de l'objet photographié capturée sur la base d'un second temps d'exposition, et le second temps d'exposition étant un multiple entier de la première durée ;
obtention (S750) d'une matrice de transformation des couleurs et/ou d'un paramètre de luminosité sur la base de la première image et de la seconde image, la matrice de transformation des couleurs étant conçue pour ajuster la couleur de la première image, et le paramètre de luminosité étant conçu pour représenter un niveau de gris de luminosité ;
réalisation (S760) d'un premier traitement d'image sur la première image sur la base de la matrice de transformation des couleurs et/ou du paramètre de luminosité, afin d'obtenir une troisième image, la troisième image étant une image avec les bandes et/ou la région présentant une dominante de couleur supprimées ; et
acquisition (S770) d'un premier paramètre sur la base des informations de luminosité de la seconde image, le premier paramètre étant utilisé pour le traitement de correction de l'assombrissement de l'objectif ;
réalisation (S780) du traitement de correction de l'assombrissement de l'objectif sur la troisième image sur la base du premier paramètre, afin d'obtenir une quatrième image ; et
affichage ou stockage (S790) de la quatrième image ; ledit procédé de traitement d'image comprenant en outre :
entrée de la première image et de la seconde image dans un modèle de traitement d'images, afin d'obtenir des données de grille bilatérale, lesdites données comprenant la matrice de transformation des couleurs et/ou le paramètre de luminosité, et la taille de la première image étant identique à celle de la seconde image.

2. Procédé de traitement d'image selon la revendication 1, dans lequel la réalisation du premier traitement d'image sur la première image sur la base de la matrice de transformation des couleurs et/ou du paramètre de luminosité, afin d'obtenir la troisième image, comprend :
réalisation d'un traitement d'interpolation sur la première image sur la base de la matrice de transformation des couleurs et/ou du paramètre de luminosité, afin d'obtenir la troisième image.

3. Le procédé de traitement d'image selon la revendication 2, dans lequel l'interpolation sur la première image basée sur la matrice de transformation de couleur et/ou le paramètre de luminosité, afin d'obtenir la troisième image, comprend :
effectuer, dans le premier espace colorimétrique, un premier traitement d'image sur la première image, basé sur la matrice de transformation de couleur et/ou le paramètre de luminosité, afin d'obtenir une image traitée ; et
effectuer, dans le premier espace colorimétrique, un second traitement d'image sur l'image traitée, afin d'obtenir la troisième image, le second traitement d'image étant un algorithme de traitement couleur dans le premier espace colorimétrique.

4. Le procédé de traitement d'image selon l'une quelconque des revendications 1 à 3, dans lequel le traitement de correction de vignettage de l'objectif comprend une correction de vignettage chromatique et une correction de vignettage de luminosité, et dans lequel l'acquisition (S770) du premier paramètre basée sur les informations de luminosité de la deuxième image comprend :
l'obtention d'un paramètre d'étalonnage pour la correction de vignettage de l'objectif, basée sur les informations de luminosité de la deuxième image ;
la multiplication du paramètre d'étalonnage pour la correction de vignettage de l'objectif par un point de pixel dans la deuxième image, afin d'obtenir une deuxième image traitée ;
l'obtention d'un second paramètre basé sur les informations statistiques de la deuxième image traitée, les informations statistiques de la deuxième image comprenant un histogramme de luminosité de la deuxième image traitée ou une carte de gradient de luminosité de la deuxième image traitée, et le second paramètre étant configuré pour effectuer la correction de vignettage chromatique ; et
la multiplication du paramètre d'étalonnage pour la correction de vignettage de l'objectif par le second paramètre, afin d'obtenir le premier paramètre, le premier paramètre étant configuré pour effectuer la correction de vignettage chromatique et la correction de vignettage de luminosité.

5. Le procédé de traitement d'image selon l'une quelconque des revendications 1 à 4, dans lequel, avant la capture (S740) de la deuxième image, le procédé comprend en outre :
détecter le scénario de prise de vue dans lequel se trouve le dispositif électronique (100), et détecter l'objet en mouvement ; et
détecter qu'il y a une ou des bandes et/ou une région de dominante de couleur sur la première image.

6. Le procédé de traitement d'image selon l'une quelconque des revendications 1 à 5, dans lequel une valeur de la première durée est obtenue en fonction du nombre de fois que la source lumineuse clignotante clignote par seconde.

7. Le procédé de traitement d'image selon la revendication 6, dans lequel la première durée = 1000/le nombre de fois que la source lumineuse clignotante clignote par seconde.

8. Le procédé de traitement d'image selon la revendication 1, dans lequel le modèle de traitement d'image est un réseau de neurones convolutifs.

9. Le procédé de traitement d'image selon la revendication 1 ou 8, dans lequel le modèle de traitement d'image est entraîné selon la méthode suivante :
acquisition de données d'échantillon, les données d'échantillon comprenant une première image d'échantillon, une deuxième image d'échantillon et une troisième image d'échantillon, la deuxième image d'échantillon comprenant un contenu d'image et une région de bande et/ou de dominante de couleur dans la première image d'échantillon, la troisième image d'échantillon ayant le même contenu d'image que la première image d'échantillon, et la qualité d'image de la troisième image d'échantillon étant supérieure à celle de la première image d'échantillon ;
entrer la première image d'échantillon et la deuxième image d'échantillon dans un modèle de traitement d'image à entraîner afin d'obtenir des données de grille bilatérale prédites ;
effectuer un traitement d'interpolation sur la deuxième image d'échantillon sur la base des données de grille bilatérale prédites pour obtenir une image prédite ; et
entraîner le modèle de traitement d'image à entraîner sur la base d'une différence entre l'image prédite et la troisième image d'échantillon afin d'obtenir le modèle de traitement d'image.

10. Le procédé de traitement d'image selon l'une quelconque des revendications 1 à 9, dans lequel les informations de luminosité de la deuxième image comprennent : des données d'un canal de luminosité de la deuxième image ou une valeur de luminosité d'un point de pixel dans la deuxième image.

11. Un procédé de traitement d'image, appliqué à un dispositif électronique (100), dans lequel une source lumineuse (260) de l'environnement de prise de vue dans lequel se trouve le dispositif électronique (100) est une source lumineuse scintillante, et le procédé de traitement d'image comprend :
activer (S401) une application caméra ;
affichage d'une première image, la première image étant une image d'un objet photographié capturée sur la base d'un premier temps d'exposition, l'objet photographié étant un objet en mouvement, le premier temps d'exposition étant inférieur à une première durée, et la première image comprenant une région de bandes et/ou de dominante de couleur ;
détecter (S405) une première opération, la première opération indiquant que le dispositif électronique (100) doit prendre une photo ou enregistrer une vidéo ;
capturer (S406) une deuxième image en réponse à la première opération, la deuxième image étant une image de l'objet photographié capturée sur la base d'un deuxième temps d'exposition, et le deuxième temps d'exposition étant un multiple entier de la première durée ;
acquérir (S407) un premier paramètre sur la base des informations de luminosité de la deuxième image, le premier paramètre étant configuré pour effectuer un traitement de correction du vignettage de l'objectif ;
effectuer (S409) un traitement de correction du vignettage de l'objectif sur la deuxième image sur la base du premier paramètre afin d'obtenir une cinquième image ; et
obtention d'une matrice de transformation de couleur et/ou d'un paramètre de luminosité sur la base de la première image et de la cinquième image, la matrice de transformation de couleur étant configurée pour ajuster une couleur de la première image, et le paramètre de luminosité étant configuré pour représenter un niveau de gris de luminosité ;
effectuer un premier traitement d'image sur la première image sur la base de la matrice de transformation de couleur et/ou du paramètre de luminosité, afin d'obtenir une quatrième image, la quatrième image étant une image dont la région présentant le bandeau et/ou la dominante de couleur a été supprimée ; et
affichage ou stockage (S410) de la quatrième image ; le procédé de traitement d'image comprenant en outre :
entrée de la première image et de la cinquième image dans un modèle de traitement d'image, pour obtenir des données de grille bilatérale, les données de grille bilatérale comprenant la matrice de transformation de couleur et/ou le paramètre de luminosité, et la taille de la première image étant identique à celle de la cinquième image.

12. Procédé de traitement d'image selon la revendication 11, dans lequel la première image est une image sur laquelle une correction de vignettage de l'objectif est effectuée sur la base du premier paramètre.

13. Procédé de traitement d'image selon les revendications 11 à 12, dans lequel l'exécution du premier traitement d'image sur la première image sur la base de la matrice de transformation de couleur et/ou du paramètre de luminosité, pour obtenir la quatrième image, comprend :
exécution d'un traitement d'interpolation sur la première image sur la base de la matrice de transformation de couleur et/ou du paramètre de luminosité, afin d'obtenir la quatrième image.
